# EUROPEAN PATENT APPLICATION

(11) **EP 4 693 981 A1**
(43) Date of publication of application: **11.02.2026**
(21) Application number: 24784109.1
(22) Date of filing: 26.03.2024
(51) Int. Cl.: H04L 1/1812

(54) **COMMUNICATION METHOD AND COMMUNICATION APPARATUS**

(30) Priority: 07.04.2023 CN 202310417379
(71) Applicant: Huawei Technologies Co., Ltd., Shenzhen, Guangdong 518129 (CN)
(72) Inventor: LIU, Nannan, Shenzhen, Guangdong 518129 (CN); LI, Bingzhao, Shenzhen, Guangdong 518129 (CN); QIANG, Li, Shenzhen, Guangdong 518129 (CN)
(74) Representative: Roth, Sebastian
(86) International application number: PCT/CN2024/083788
(87) International publication number: WO 2024/208024

(57) **Abstract**

A communication method and a communication apparatus are provided. The communication method includes: determining first information, where the first information includes information about a count value of first data, and the first data is discarded data; and updating a state variable based on a first count value, where the first count value is the count value of the first data. The state variable is updated based on the count value of the discarded data, to effectively avoid a packet loss.

## Description

This application claims priority to Chinese Patent Application No. 202310417379.5, filed with the China National Intellectual Property Administration on April 7, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In conventional technologies, a receive end receives a packet data convergence protocol (packet data convergence protocol, PDCP) protocol data unit (protocol data unit) PDU. The PDCP PDU includes a sequence number (sequence number, SN). The receive end further calculates a hyper frame number (hyper frame number, HFN) of the PDCP PDU based on the received SN, to obtain a count COUNT value of the PDCP PDU. The receive end determines, based on the obtained COUNT value, whether to discard the PDCP PDU. If the receive end determines not to discard the data, the receive end may update a state variable based on the COUNT value.

In some cases, a transmit end may discard data. In this case, there is no effective method for the receive end to update the state variable.

### SUMMARY

Embodiments of this application provide a communication method and a communication apparatus, to avoid a problem of a data packet loss caused by update of a PDCP entity state variable, so as to improve transmission performance.

According to a first aspect, a communication method is provided. The method may be performed by a terminal device, or may be performed by a chip, a circuit, or a module in the terminal device. This is not limited in this application. Alternatively, the method may be performed by a network device, or may be performed by a chip, a circuit, or a module in the network device. This is not limited in this application. Without causing context ambiguity, this application is described by using a first apparatus.

The method includes:
The first apparatus determines first information, where the first information includes information about a count value of first data, and the first data is discarded data; and the first apparatus updates a state variable based on a first count value, where the first count value is the count value of the first data.

According to the method provided in this application, the first apparatus determines the count value of the first data, and updates the state variable based on the first count value. The first count value is the count value of the first data, and the first data is the discarded data. It may be understood that, compared with conventional technologies, the first apparatus determines the count value of the discarded data, and updates the state variable based on the count value of the discarded data, to effectively avoid a problem of a data packet loss caused by direct update of the state variable based on a count value greater than that of the discarded data.

With reference to the first aspect, in some possible implementations, the first data is considered as having been received by the first apparatus.

Based on the foregoing technical solution, the first data is the discarded data, and the first data is considered as having been received by the first apparatus. The first apparatus determines that the first data is the discarded data, and considers the first data as having been received.

It should be understood that, in some specific implementation processes, the first apparatus may pretend that the first data has been received, and update the state variable; or the first apparatus may configure an empty data packet at a position corresponding to the discarded data, and update the state variable.

With reference to the first aspect, in some possible implementations, if a first condition is met, the first data is considered as having been received by the first apparatus. The first condition includes: A first state variable is less than or equal to the first count value, and the first state variable indicates a count value of a 1^{st} data that the first apparatus waits to deliver.

Based on the foregoing technical solution, when the first state variable is less than or equal to the first count value, the first data is considered as having been received by the first apparatus.

With reference to the first aspect, in some possible implementations, the first information includes a count value of at least one data, the at least one data includes the first data, and each of the at least one data is discarded data.

Based on the foregoing technical solution, the first information includes the count value of the at least one data, the at least one data may include one or more data, each of the at least one data is the discarded data, and the at least one data includes the first data. The first count value is a smallest count value in the at least one data.

It should be understood that, generally, one data may correspond to one count value.

With reference to the first aspect, in some possible implementations, the first data is considered as having been received by the first apparatus and stored in a buffer by the first apparatus.

With reference to the first aspect, in some possible implementations, the first information further includes information about a first quantity, and the first quantity indicates a quantity of the discarded data.

With reference to the first aspect, in some possible implementations, that the first apparatus updates the state variable based on the first count value includes:

If the first count value is greater than or equal to a second state variable, the first apparatus updates the second state variable to a sum of the first count value and the first quantity, or the first apparatus updates the second state variable to a sum of the first count value and 1; and/or
if the first count value is equal to the first state variable, the first apparatus delivers at least one third data, where the third data includes data received by the first apparatus and stored in a buffer by the first apparatus, and a count value corresponding to the third data is greater than or equal to the first state variable; and/or
if the first count value is equal to the first state variable, the first apparatus updates the first state variable to a fourth count value, where the fourth count value is greater than the first state variable. The first state variable indicates a count value of a 1^{st} data that the first apparatus waits to deliver, the second state variable indicates a count value of a next data that the first apparatus expects to receive, and the first quantity indicates the quantity of the discarded data.

Based on the foregoing technical solution, when the first apparatus updates the state variable based on the first count value, if the first count value is greater than or equal to the second state variable indicating a count value of a next data that the first apparatus expects to receive, the first apparatus updates the second state variable to the sum of the first count value and the first quantity. When the at least one data includes a plurality of (two or more) data, the first apparatus needs to update the second state variable only once. Alternatively, the first apparatus updates the second state variable to the sum of the first count value and 1, and the first apparatus needs to determine a relationship between a count value of each of the at least one data and the second state variable, and further determines whether to update the second state variable.

When the first count value is equal to the first state variable, the first apparatus delivers the at least one third data to an upper layer. When a plurality of pieces (two or more) of third data are delivered, count values of the third data are consecutive, and a count value corresponding to the third data is greater than or equal to the first state variable.

According to the first aspect, in some possible implementations, that the first apparatus updates the state variable based on the first count value further includes: If a reordering timer is running, and the first state variable is greater than or equal to a third state variable, the first apparatus stops the reordering timer; and/or if the reordering timer is not running, and the first state variable is less than the second state variable, the first apparatus starts the reordering timer. The first state variable indicates a count value of a 1^{st} data that the first apparatus waits to deliver, the second state variable indicates a count value of a next data that the first apparatus expects to receive, and the third state variable indicates a sum of a count value of data that triggers the reordering timer and 1.

According to the first aspect, in some possible implementations, the first apparatus obtains a sequence number SN of the first data or the first count value.

Based on the foregoing technical solution, the first apparatus may further obtain the sequence number SN of the first data or the first count value. The first apparatus may determine the first count value based on the obtained sequence number SN of the first data.

According to the first aspect, in some possible implementations, when the first apparatus obtains the sequence number SN of the first data, the method further includes: The first apparatus determines the first count value based on the sequence number SN of the first data and the first state variable, where the first state variable indicates a count value of a 1^{st} data that the first apparatus waits to deliver.

Based on the foregoing technical solution, when the first apparatus obtains the sequence number SN of the first data, the first apparatus determines the first count value based on the sequence number SN of the first data and the first state variable.

Specifically, the first apparatus may calculate a hyper frame number HFN based on the sequence number SN of the first data, and determine the first count value based on the sequence number SN and the hyper frame number HFN.

According to the first aspect, in some possible implementations, when the first information includes the count value of the at least one data, the method further includes: The first apparatus obtains any one or more of the following information of the at least one data: a start sequence number SN, an end sequence number SN, a start count value, an end count value, and a first quantity, where the first quantity is a quantity of the discarded data in the first data set.

Based on the foregoing technical solution, when the first information determined by the first apparatus includes the count value of the at least one data, the first apparatus may further obtain information such as the start sequence number SN, the end sequence number SN, the start count value, the end count value, and the first quantity of the at least one data. The first apparatus may further determine, based on one or more of the foregoing information, a count value related to the at least one data. The related count value may be the start count value of the at least one data, the end count value of the at least one data, or a count value or count values of any one or more data in the at least one data.

According to the first aspect, in some possible implementations, the first apparatus determines the start count value of the at least one data based on the start sequence number SN and the first state variable; and/or the first apparatus determines a count value of at least one of the at least one data based on the start count value of the at least one data and the first quantity, where the first state variable indicates a count value of a 1^{st} data that the first apparatus waits to deliver.

According to a second aspect, a communication method is provided. The method may be performed by a terminal device, or may be performed by a chip, a circuit, or a module in the terminal device. This is not limited in this application. Alternatively, the method may be performed by a network device, or may be performed by a chip, a circuit, or a module in the network device. This is not limited in this application. Without causing context ambiguity, this application is described by using a first apparatus.

The method includes:
The first apparatus determines first information, where the first information includes a count value of at least one data, and each of the at least one data is discarded data.

If a second condition is met, the first apparatus performs any one or more of the following.

The first apparatus delivers at least one received data whose count value is greater than or equal to a second count value plus 1;
the first apparatus updates a first state variable to a third count value, where the third count value is greater than the second count value; and
if a reordering timer is running, and the first state variable is greater than or equal to a third state variable, the first apparatus stops the reordering timer; or
if the reordering timer is not running, and the first state variable is less than the second state variable, the first apparatus starts the reordering timer.

The second condition is: the first state variable is equal to a first count value, the first count value is a count value of first data, the first data is data with a smallest count value in the at least one data, the second count value is a count value of second data, the second data is data with a largest count value in the at least one data, the first state variable indicates a count value of a 1^{st} data that the first apparatus waits to deliver, the second state variable indicates a count value of a next data that the first apparatus expects to receive, and the third state variable indicates a sum of a count value of data that triggers the reordering timer and 1.

According to the method provided in this application, the first apparatus determines the first information, where the first information includes the count value of the at least one data, and each of the at least one data is the discarded data. The first apparatus further updates a state variable based on the first count value of the at least one data and the first state variable. When the first apparatus determines that the first state variable is equal to the first count value, the first apparatus delivers the at least one received data whose count value is greater than or equal to the second count value plus 1, where the second count value is a largest count value in the count value of the at least one data. The first apparatus delivers the at least one received data whose count value is greater than or equal to the second count value plus 1 to an upper layer, and count values of the at least one data delivered by the first apparatus to the upper layer are consecutive. When the first apparatus determines that the first state variable is equal to the first count value, the first apparatus may update the first state variable to the third count value, where the third count value is greater than the second count value, and the third count value is a count value of a 1^{st} data packet that is not delivered by the first apparatus to the upper layer and that is greater than the second count value. According to the technical solution provided in this application, when the first apparatus determines that the first state variable is equal to the first count value, the first apparatus further determines to update the state variable, to avoid a data packet loss and improve transmission performance.

With reference to the second aspect, in some possible implementations, when the second state variable is less than the second count value, the method further includes: The first apparatus updates the second state variable to the second count value plus 1.

With reference to the second aspect, in some possible implementations, after the first apparatus determines the first information, the method further includes: If a third condition is met, the first apparatus ignores the first information. The third condition includes: The first state variable is greater than the second count value.

Based on the foregoing technical solution, after the first apparatus determines the first information, when the first state variable is greater than the second count value, the first apparatus ignores the first information, in other words, the first apparatus may not update the state variable when the second condition is met.

With reference to the second aspect, in some possible implementations, the method further includes: The first apparatus obtains any one or more of the following information of the at least one data:
a start sequence number SN, an end sequence number SN, a start count value, an end count value, and a first quantity.

The first quantity is a quantity of the discarded data in the at least one data.

Based on the foregoing technical solution, before the first apparatus determines the first information, the first apparatus may further obtain one or more of the start sequence number SN, the end sequence number SN, the start count value, the end count value, and the first quantity of the at least one data. The first apparatus may determine the count value of the at least one data based on the obtained at least one information.

With reference to the second aspect, in some possible implementations, when the first apparatus obtains the sequence number SN of the first data, the method further includes: The first apparatus determines the first count value based on the sequence number SN of the first data and the first state variable, where the first state variable indicates a count value of a 1^{st} data that the first apparatus waits to deliver.

Based on the foregoing technical solution, when the first apparatus obtains the sequence number SN of the first data in the at least one data, the first apparatus determines the count value of the first data, that is, the first count value, based on the sequence number SN of the first data and the first state variable.

With reference to the second aspect, in some possible implementations, the method further includes: The first apparatus determines the start count value of the at least one data based on the start sequence number SN and the first state variable; and/or the first apparatus determines the end count value of the at least one data based on the end sequence number SN and the first state variable; and/or, the first apparatus determines the end count value of the at least one data based on the first count value and the first quantity. The first state variable indicates a count value of a 1^{st} data that the first apparatus waits to deliver.

According to a third aspect, an apparatus is provided. The apparatus includes a processing unit, configured to determine first information, where the first information includes information about a count value of first data, and the first data is discarded data. The processing unit is further configured to update a state variable based on a first count value, where the first count value is the count value of the first data.

With reference to the third aspect, in some possible implementations, the first data is considered as having been received by the first apparatus.

With reference to the third aspect, in some possible implementations, if a first condition is met, the first data is considered as having been received by the first apparatus. The first condition includes: A first state variable is less than or equal to the first count value, and the first state variable indicates a count value of a 1^{st} data that the first apparatus waits to deliver.

With reference to the third aspect, in some possible implementations, the first information includes a count value of at least one data, the at least one data includes the first data, and each of the at least one data is discarded data.

With reference to the third aspect, in some possible implementations, the first data is considered as having been received by the first apparatus and stored in a buffer by the first apparatus.

With reference to the third aspect, in some possible implementations, the first information further includes information about a first quantity, and the first quantity indicates a quantity of the discarded data.

With reference to the third aspect, in some possible implementations, that the processing unit is configured to update the state variable based on the first count value includes:

If the first count value is greater than or equal to a second state variable, the processing unit is further configured to update the second state variable to a sum of the first count value and the first quantity, or the processing unit is further configured to update the second state variable to a sum of the first count value and 1; and/or
if the first count value is equal to the first state variable, the processing unit is further configured to deliver at least one third data, where the third data includes data received by the first apparatus and stored in a buffer by the first apparatus, and a count value corresponding to the third data is greater than or equal to the first state variable; and/or
if the first count value is equal to the first state variable, the processing unit is further configured to update the first state variable to a fourth count value, where the fourth count value is greater than the first state variable.

The first state variable indicates a count value of a 1st data that the first apparatus waits to deliver, the second state variable indicates a count value of a next data that the first apparatus expects to receive, and the first quantity indicates the quantity of the discarded data.

With reference to the third aspect, in some possible implementations, that the processing unit is configured to update the state variable based on the first count value further includes: If a reordering timer is running, and the first state variable is greater than or equal to a third state variable, the processing unit is further configured to stop the reordering timer; and/or if the reordering timer is not running, and the first state variable is less than the second state variable, the processing unit is further configured to start the reordering timer. The first state variable indicates a count value of a 1^{st} data that the first apparatus waits to deliver, the second state variable indicates a count value of a next data that the first apparatus expects to receive, and the third state variable indicates a sum of a count value of data that triggers the reordering timer and 1.

With reference to the third aspect, in some possible implementations, a receiving unit is configured to obtain a sequence number SN of the first data or the first count value.

With reference to the third aspect, in some possible implementations, when the receiving unit is configured to obtain the sequence number SN of the first data, the processing unit is further configured to determine the first count value based on the sequence number SN of the first data and the first state variable, where the first state variable indicates a count value of a 1^{st} data that the first apparatus waits to deliver.

With reference to the third aspect, in some possible implementations, when the first information includes the count value of the at least one data, the receiving unit is further configured to obtain any one or more of the following information of the at least one data: a start sequence number SN, an end sequence number SN, a start count value, an end count value, and a first quantity, where the first quantity is a quantity of data in the first data set.

With reference to the third aspect, in some possible implementations, the processing unit is further configured to determine the start count value of the at least one data based on the start sequence number SN and the first state variable; and/or the processing unit is further configured to determine a count value of at least one of the at least one data based on the start count value of the at least one data and the first quantity, where the first state variable indicates a count value of a 1^{st} data that the first apparatus waits to deliver.

According to a fourth aspect, a communication apparatus is provided. The apparatus includes a processing unit, configured to determine first information, where the first information includes a count value of at least one data, and each of the at least one data is discarded data.

If a second condition is met, the first apparatus performs any one or more of the following.

The processing unit is further configured to deliver at least one received data whose count value is greater than or equal to a second count value plus 1;
the processing unit is further configured to update a first state variable to a third count value, where the third count value is greater than the second count value; and
if a reordering timer is running, and the first state variable is greater than or equal to a third state variable, the processing unit is further configured to stop the reordering timer; or
if the reordering timer is not running, and the first state variable is less than the second state variable, the processing unit is further configured to start the reordering timer.

The second condition is: the first state variable is equal to a first count value, the first count value is a count value of first data, the first data is data with a smallest count value in the at least one data, the second count value is a count value of second data, the second data is data with a largest count value in the at least one data, the first state variable indicates a count value of a 1^{st} data that the first apparatus waits to deliver, the second state variable indicates a count value of a next data that the first apparatus expects to receive, and the third state variable indicates a sum of a count value of data that triggers the reordering timer and 1.

With reference to the fourth aspect, in some possible implementations, when the second state variable is less than the second count value, the processing unit is further configured to update the second state variable to the second count value plus 1.

With reference to the fourth aspect, in some possible implementations, after the first apparatus determines the first information, if a third condition is met, the processing unit is further configured to ignore the first information. The third condition includes: The first state variable is greater than the second count value.

With reference to the fourth aspect, in some possible implementations, the method further includes: The processing unit is further configured to obtain any one or more of the following information of the at least one data:
a start sequence number SN, an end sequence number SN, a start count value, an end count value, and a first quantity.

The first quantity is a quantity of the discarded data in the at least one data.

With reference to the fourth aspect, in some possible implementations, when the transceiver unit is further configured to obtain the sequence number SN of the first data, the processing unit is further configured to determine the first count value based on the sequence number SN of the first data and the first state variable, where the first state variable indicates a count value of a 1^{st} data that the first apparatus waits to deliver.

With reference to the fourth aspect, in some possible implementations, when the transceiver unit is further configured to obtain the start sequence number SN of the at least one data, the processing unit is further configured to determine the start count value of the at least one data based on the start sequence number SN and the first state variable; and/or the processing unit is further configured to determine the end count value of the at least one data based on the end sequence number SN and the first state variable; and/or the processing unit is further configured to determine the end count value of the at least one data based on the first count value and the first quantity. The first state variable indicates a count value of a 1^{st} data that the first apparatus waits to deliver.

According to a fifth aspect, a communication apparatus is provided. The communication apparatus may be a terminal device or a network device, or may be a component (for example, a chip or a circuit) of the terminal device or the network device. The communication apparatus includes a processor, and the processor is configured to invoke a computer program from a memory and run the computer program, so that the communication apparatus performs the method in any one of the possible implementations of the first aspect or the second aspect.

Optionally, there may be one or more processors.

Optionally, the communication apparatus further includes one or more memories. The memory may be integrated with the processor, or the memory and the processor are separately disposed.

Optionally, the communication apparatus further includes a transmitter machine (transmitter) and a receiver machine (receiver). When the communication apparatus is the terminal device or the network device, the transmitter (transmitter) and the receiver machine (receiver) may be radio frequency modules or the like. When the communication apparatus is the component (for example, the chip or the circuit) of the terminal device or the network device, the transmitter machine (transmitter) and the receiver machine (receiver) may be output/input circuits, interfaces, or the like.

According to a sixth aspect, a communication method is provided, including the method in any one of the possible implementations of the first aspect and the method in any one of the possible implementations of the second aspect.

According to a seventh aspect, a communication system is provided, including a network device and a terminal device. The terminal device is configured to perform the method in any one of the possible implementations of the first aspect, and the network device is configured to perform the method in any one of the possible implementations of the second aspect.

According to an eighth aspect, a communication system is provided, including a network device, a first terminal device, and a second terminal device. The first terminal device may be configured to perform the method in any one of the possible implementations of the first aspect, the second terminal device may be configured to perform the method in any one of the possible implementations of the second aspect, and the first terminal device is different from the second terminal device.

According to a ninth aspect, a computer-readable storage medium is provided. The computer-readable storage medium stores a computer program or code. When the computer program or code is run on a computer, the computer is enabled to perform the method in any one of the possible implementations of the first aspect or the second aspect.

According to a tenth aspect, a chip is provided, and includes at least one processor. The at least one processor is coupled to a memory. The memory is configured to store a computer program. The processor is configured to invoke the computer program from the memory and run the computer program, so that an apparatus on which a chip system is installed performs the method in any one of the possible implementations of the first aspect or the second aspect.

The chip may include an input circuit or interface configured to send information or data, and an output circuit or interface configured to receive information or data.

According to a ninth aspect, a computer program product is provided. The computer program product includes computer program code. When the computer program code is run on an apparatus, the apparatus is enabled to perform the method in any one of the possible implementations of the first aspect or the second aspect.

### BRIEF DESCRIPTION OF DRAWINGS

FIG. 1 is a diagram of a communication system to which an embodiment of this application is applicable;
FIG. 2 is a diagram of another network architecture to which an embodiment of this application is applicable;
FIG. 3 is a diagram of still another network architecture used in an embodiment of this application;
FIG. 4 is a diagram of a structure of a GOP to which an embodiment of this application is applicable;
FIG. 5 is a diagram of a protocol stack according to an embodiment of this application;
FIG. 6 is a diagram of a relationship between a PDU and an SDU at each protocol layer according to an embodiment of this application;
FIG. 7 is a diagram of PDCP PDUs according to an embodiment of this application;
FIG. 8 is a diagram of a COUNT according to an embodiment of this application;
FIG. 9 is a block diagram of a communication method according to an embodiment of this application;
FIG. 10 is a diagram of a packet loss scenario according to an embodiment of this application;
FIG. 11 is a block diagram of another communication method according to an embodiment of this application;
FIG. 12 is a block diagram of still another communication method according to an embodiment of this application;
FIG. 13 is a block diagram of a communication apparatus according to an embodiment of this application;
FIG. 14 is a block diagram of another communication apparatus according to an embodiment of this application; and
FIG. 15 is a block diagram of still another communication apparatus according to an embodiment of this application.

### DESCRIPTION OF EMBODIMENTS

The following describes technical solutions of embodiments in this application with reference to the accompanying drawings.

The technical solutions in embodiments of this application may be applied to various communication systems, such as a global system for mobile communications (Global System of Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5^{th} Generation (5^{th} Generation, 5G) system or a new radio (New Radio, NR) system, a 6^{th} Generation (6^{th} Generation, 6G) or a future communication system.

A terminal device in embodiments of this application is a device having a wireless transceiver function, may be a fixed device, or may be a mobile device, and may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. The terminal device may alternatively be a handheld device (for example, a mobile phone), a wearable device, a vehicle-mounted device, or a wireless apparatus built in the foregoing device (for example, a communication module, a modem, or a chip system). The terminal device is configured to be connected to people, things, machines, and the like, and may be widely used in various scenarios, for example, including but not limited to the following scenarios: cellular communication, device to device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, smart wearable, smart transportation, a smart city (smart city), an uncrewed aerial vehicle, a robot, and the like. This is not limited in embodiments of this application.

A network device in embodiments of this application may be a device configured to communicate with the terminal device. The network device may be a base transceiver station (Base Transceiver Station, BTS) in the global system for mobile communications (Global System for Mobile Communications, GSM) or code division multiple access (Code Division Multiple Access, CDMA), may be a NodeB (NodeB, NB) in a wideband code division multiple access (wideband code division multiple access, WCDMA) system, may be an evolutional NodeB (Evolutional NodeB, eNB or eNodeB) in the LTE system, or may be a radio controller in a scenario of a cloud radio access network (Cloud Radio Access Network, CRAN). Alternatively, the network device may be a relay station, an access point, a vehicle-mounted device, a wearable device, a network device in the 5G network, a network device in the future evolved PLMN network, or the like. For example, the network device may include an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a base station that is subsequently evolved from 3GPP, and an access node, a wireless relay node, a wireless backhaul node, and the like in a Wi-Fi system. The base station may be a macro base station, a micro base station, a picocell base station, a small cell, a relay station, or the like. A plurality of base stations support networks of a same access technology mentioned above, or support networks of different access technologies mentioned above. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a V2X technology may be a road side unit (road side unit, RSU). This is not specifically limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application is executable to perform communication according to the method provided in embodiments of this application. For example, the execution body of the method provided in embodiments of this application may be the terminal device or the network device, or a functional module, a chip, or a circuit that can invoke and execute the program in the terminal device or the network device.

The following further describes the technical solutions of this application in detail with reference to the accompanying drawings of this specification.

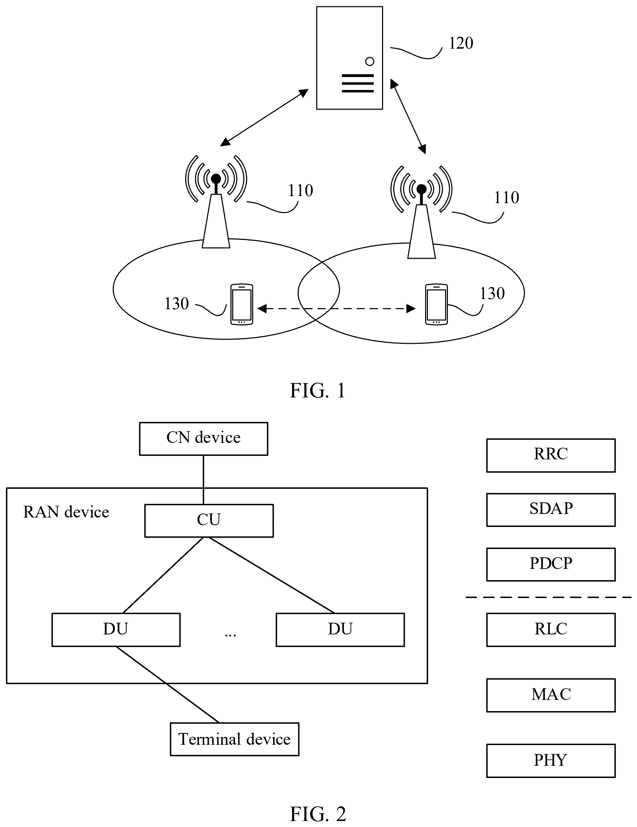

FIG. 1 is a diagram of a communication system to which an embodiment of this application applicable. As shown in FIG. 1, a terminal device 130 may access a wireless network, to obtain a service of an external network (for example, the internet) by using the wireless network, or communicate with another device by using the wireless network, for example, may communicate with another terminal device. The wireless network includes a radio access network (radio access network, RAN) device 110 and/or a core network (core network, CN) device 120. The RAN device 110 is configured to connect the terminal device 130 to the wireless network, and the CN device 120 is configured to manage the terminal device and provide a gateway for communication with an external network.

It should be understood that a quantity of devices in the communication system shown in FIG. 1 is merely an example. This embodiment of this application is not limited thereto. In actual application, the communication system may include more terminal devices 130 and more RAN devices 110, and may further include another device.

It should be further understood that, when the terminal device 130 communicates with another terminal device (for example, a terminal device 130'), the technical solutions in embodiments of this application are also applicable.

FIG. 2 is a diagram of another network architecture to which an embodiment of this application is applicable. As shown in FIG. 2, the network architecture includes a CN device, a RAN device, and a terminal device. The RAN device includes a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, some functions of the radio frequency apparatus are independently integrated, and some functions of the radio frequency apparatus are integrated into the baseband apparatus. For example, in an LTE communication system, a RAN device (eNB) includes a baseband apparatus and a radio frequency apparatus. The radio frequency apparatus may be remotely disposed relative to the baseband apparatus. For example, a remote radio unit (remote radio unit, RRU) is a remote radio unit disposed relative to a BBU.

Communication between the RAN device and a terminal device complies with a protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The RAN device may implement functions of protocol layers such as an RRC layer, a PDCP layer, an RLC layer, and a MAC layer by using one node, or may implement the functions of these protocol layers by using a plurality of nodes. For example, in an evolved structure, the RAN device may include a CU and DUs, and a plurality of DUs may be centrally controlled by one CU. As shown in FIG. 2, for the CU and the DU, division may be performed based on a protocol layer of a radio network. For example, functions of the PDCP layer and a protocol layer above the PDCP layer are set on the CU, and functions of protocol layers below the PDCP layer, such as the RLC layer and the MAC layer, are set on the DU.

The division at such protocol layers is merely an example. The division may also be performed at another protocol layer such as the RLC layer, so that functions of the RLC layer and protocol layers above the RLC layer are set on the CU and functions of protocol layers below the RLC layer are set on the DU. Alternatively, the division is performed within a specific protocol layer. For example, some functions of the RLC layer and functions of protocol layers above the RLC layer are set on the CU, and remaining functions of the RLC layer and functions of protocol layers below the RLC layer are set on the DU. In addition, division may alternatively be performed in another manner. For example, division is performed based on a delay. A function whose processing time needs to meet a delay requirement is set on the DU, and a function whose processing time does not need to meet the delay requirement is set on the CU.

In addition, the radio frequency apparatus may be independently integrated, not placed in the DU, or may be integrated in the DU. Alternatively, a part of the radio frequency apparatus may be remotely integrated in the DU. This is not limited herein.

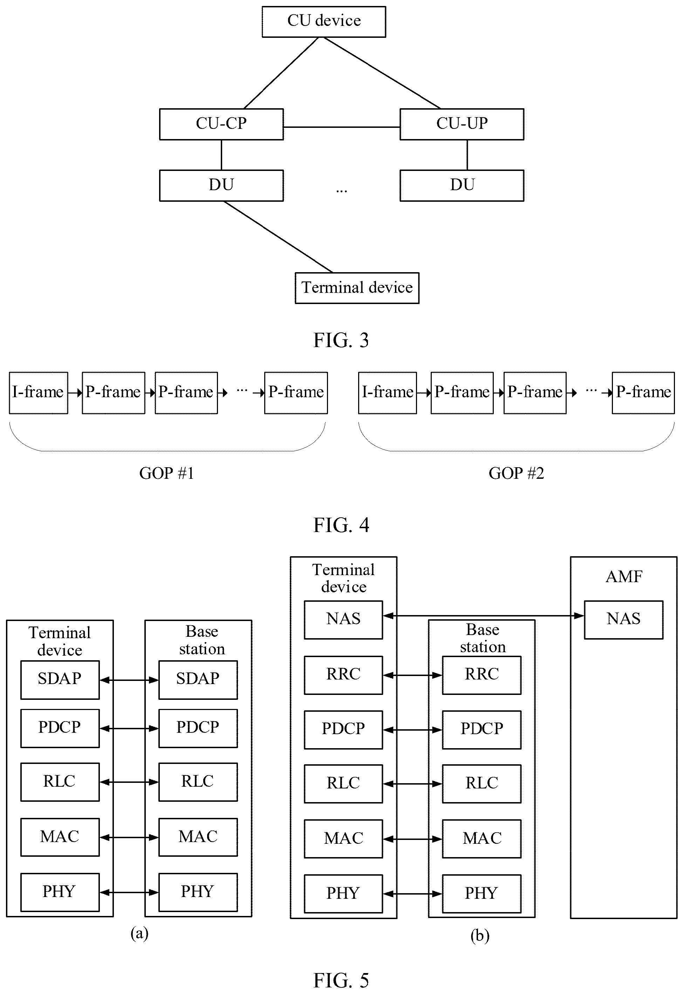

FIG. 3 is a diagram of still another network architecture to which an embodiment of this application applicable. Compared with the network architecture shown in FIG. 2, in FIG. 3, a control plane (CP) and a user plane (UP) of a CU may be further separated and divided into different entities for implementation. The different entities are respectively a control plane (control plane, CP) CU entity (namely, a CU-CP entity) and a user plane (user plane, UP) CU entity (namely, a CU-UP entity).

In the foregoing network architecture, signaling generated by the CU may be sent to the terminal device by using the DU, or signaling generated by the terminal device may be sent to the CU by using the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling of the RRC or PDCP layer is finally processed as signaling of the PHY layer, to be sent to the terminal device, or is converted from received signaling of the PHY layer. In this architecture, it may also be considered that the signaling at the RRC layer or the PDCP layer is sent by the DU, or sent by the DU and a radio frequency apparatus.

The network architecture shown in FIG. 1, FIG. 2, or FIG. 3 is applicable to communication systems of various radio access technologies (radio access technology, RAT), for example, an LTE communication system, a 5G (or referred to as new radio (new radio, NR)) communication system, a transition system between the LTE communication system and the 5G communication system, where the transition system may also be referred to as a 4. 5G communication system, or certainly, a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may learn that with evolution of communication network architectures and emergence of new service scenarios, the technical solutions provided in embodiments of this application are also applicable to similar technical problems. For example, the present invention is applicable to a vehicle-to-everything (vehicle-to-everything, V2X) scenario.

A first apparatus may be located in the terminal device or the network device based on a function implemented by an apparatus in the following embodiments of this application. When the foregoing CU-DU structure is used, the network device may be a CU node, a DU node, or a RAN device including the CU node and the DU node. This is not specifically limited in this application.

It should be understood that the network architectures shown in FIG. 1 to FIG. 3 are merely examples of this application, and do not limit embodiments of this application. Particularly, embodiments of this application may be further applicable to another network architecture, where, for example, a base station and a core network are not distinguished, that is, the base station and the core network may belong to a same network device. The network device communicates with the terminal device; or the terminal device communicates with the terminal device.

To better understand embodiments of this application, before embodiments of this application are described, terms used in this application are first briefly described. It may be understood that the explanations and descriptions are intended to facilitate understanding of embodiments of this application, but should not be construed as a limitation on the protection scope claimed in embodiments of this application.

### 1. Extended reality (extended reality, XR):

The XR may be various environments that combine reality and virtuality and that are generated by a computing technology and a wearable device, and human-computer interaction, and mainly includes reality-virtuality interaction technologies such as virtual reality (virtual reality, VR), augmented reality (augmented reality, AR), and mixed reality (mixed reality, MR). To improve experience of interaction between human and a virtual world, an XR service has strict requirements on bandwidth and a delay.

For example, during downlink transmission, an encoder of a server generates data content at a fixed frequency (for example, 60 Hz or 120 Hz), and transmits the data content to an XR terminal through a core network and a RAN. For example, during uplink transmission, the XR terminal may capture an image of a current scene through a built-in camera and continuously upload the image of the current scene to the server at a specific frequency (for example, 60 Hz or 120 Hz).

For example, generally, the XR service periodically generates data at a frame rate. For example, a service model of an XR type service in a downlink direction roughly includes AR/VR and cloud gaming CG. An AR/VR frame rate may be 60 fps, to be specific, 60 frames of video images are generated per second, and one video frame appears about every 16.66 ms. Alternatively, the AR/VR frame rate may be 120 fps, to be specific, 120 frames of video images are generated per second, and one video frame appears about every 8.33 ms. A CG frame rate may be 60 fps or 120 fps, to be specific, 60 frames of video images are generated per second or 120 frames of video images are generated per second. For example, a delay requirement of the XR service may be 10 ms or 30 ms.

Optionally, in an actual transmission system, a data jitter (jitter) occurs due to a data encoding delay and a network transmission delay. For example, it may be considered that the jitter complies with a truncated Gaussian distribution, and a truncated range is approximately [-4 ms, 4 ms].

For example, for an XR video service, an image may be encoded in a GOP encoding manner and/or a slice encoding mode during encoding. For example, in the slice encoding mode, one video frame may include one I-slice and one or more P-slices. For example, in the GOP encoding mode, one GOP may include one I-frame, or one GOP includes one I-frame and one or more P-frames. Optionally, the GOP may further include a B-frame. For example, the I-frame is an internal encoding frame (which may also be referred to as an intra-frame encoding frame, a key frame, an important frame, or the like), and the I-frame is a reference frame of the P-frame and/or the B-frame, and has a feature of independent encoding and decoding. For example, the P-frame is a forward predictive frame (which may also be referred to as a forward-predicted encoding frame, a forward reference frame, a dependent frame, a non-key frame, or the like). When the P-frame is decoded, a previous closest I-frame or P-frame needs to be referred to, and the P-frame may be a reference frame of a subsequent P-frame and/or B-frame. For example, the B-frame is a bi-directional interpolated prediction frame (bi-directional interpolated prediction frame), and may also be referred to as a dependent frame, a non-key frame, or the like. When the B-frame is decoded, a previous closest I-frame or P-frame and a subsequent closest P-frame need to be referred to. For example, the I-frame is a complete picture, and the P-frame records a change relative to the I-frame. If there is no I-frame, the P-frame cannot be decoded. Therefore, a transmission priority of the I-frame needs to be higher than that of the P-frame. If an I-frame fails to be transmitted (for example, the I-frame fails to be transmitted when a delay requirement of the I-frame is met) during transmission even if a subsequent video frame (for example, a P-frame) that depends on the I-frame is successfully transmitted, a receive side still cannot implement correct decoding. FIG. 4 is a diagram of a structure of a GOP according to an embodiment of this application. As shown in FIG. 4, one GOP sequence (for example, one GOP #1 or one GOP #2) includes one I-frame and a plurality of P-frames.

For example, a data burst may also be referred to as a data burst, and is a set of PDUs generated and sent by an application in a short period of time (for example, A set of data multiple PDUs generated and sent by the application in a short period of time).

For example, a PDU set may include one or more PDUs, and the PDU set is carried on a valid payload of an information unit generated at an application level (for example, A PDU Set is composed of one or more PDUs carrying the payload of one unit of information generated at the application level (for example, a frame or video slice for XRM Services, as used in TR 26.926 [27])). For example, the PDU set includes a frame (frame) or a slice (slice). For example, one PDU set includes one frame (frame) or one slice (slice).

For example, in some implementations, an application layer needs all PDUs in the PDU set to use a corresponding information unit, or the application layer needs all PDUs in the PDU set to obtain (decode) or use a corresponding information unit. For example, in other implementations, when some PDUs are lost, the application layer can still recover all or a part of the information unit. (In some implementations all PDUs in a PDU Set are needed by the application layer to use the corresponding unit of information. In other implementations, the application layer can still recover parts all or of the information unit, when some PDUs are missing.)

Optionally, one data burst includes at least one PDU set.

For example, a data burst 1 may be associated with one or more data bursts, and the one or more data bursts need to depend on the data burst 1. If the data burst 1 is discarded, the one or more data bursts may be unable to be decoded. For example, a PDU set 1 may be associated with one or more PDU sets, and the one or more PDU sets need to depend on the PDU set 1. If the PDU set 1 is discarded, the one or more PDU sets may be unable to be decoded.

### 2. New radio (new radio, NR) protocol architecture:

An NR protocol architecture in embodiments of this application may be divided into a user-plane protocol stack and a control-plane protocol stack. The following describes the foregoing two protocol stacks in detail with reference to FIG. 5. FIG. 5 is described by using interaction between a terminal device and a base station as an example, where (a) in FIG. 5 shows the user-plane protocol stack, and (b) in FIG. 5 shows the control-plane protocol stack.

The user-plane protocol stack is a protocol cluster used for user data transmission. As shown in (a) in FIG. 5, the user-plane protocol stack may include five layers: a PHY layer, a MAC layer, an RLC layer, a PDCP layer, and an SDAP layer.

An architecture of the control-plane protocol stack is a protocol cluster used for control signaling transmission of a system. As shown in (b) in FIG. 5, the control-plane protocol stack may include a non-access stratum (non-access stratum, NAS), an RRC layer, a PDCP layer, an RLC layer, a MAC layer, and a PHY layer.

For example, the PHY layer may be responsible for processing one or more of encoding and decoding, modulation and demodulation, multi-antenna mapping, and another physical layer function. For example, the MAC layer may be responsible for one or more of hybrid automatic repeat request (hybrid automatic repeat request, HARQ), uplink scheduling, downlink scheduling, and the like. For example, the RLC layer may be responsible for one or more of segmentation, reassembly, retransmission processing, and the like. For example, the PDCP layer may be responsible for one or more of header compression/decompression, security (an encryption function and an integrity protection function), retransmission, in-order delivery, and the like. For example, the RRC layer may be responsible for one or more of functions such as broadcast, paging, RRC connection management, radio bearer control, mobility management, and terminal device measurement reporting and control. For example, the NAS layer may be responsible for one or more of functions such as identity verification, mobility management, and security control.

For the user-plane protocol stack, an NR protocol stack has an additional SDAP layer compared with a long term evolution (long term evolution, LTE) protocol stack. For the control-plane protocol stack, the NR protocol stack is similar to the LTE protocol stack.

Optionally, in embodiments of this application, each layer in the protocol stack may be replaced with an entity. For example, the PDCP layer may be replaced with a PDCP entity, and the SDAP layer may be replaced with an SDAP entity. A unified description is provided herein, and details are not described below.

### 3. PDU and SDU (service data unit, service data unit):

At each protocol layer (for example, any one or more of an SDAP layer, an RRC layer, a PDCP layer, an RLC layer, and a MAC layer), an SDU at an Nth layer corresponds to a PDU at an upper layer. In other words, a PDU at a current layer is an SDU at a lower layer, and an SDU at a current layer is a PDU at an upper layer.

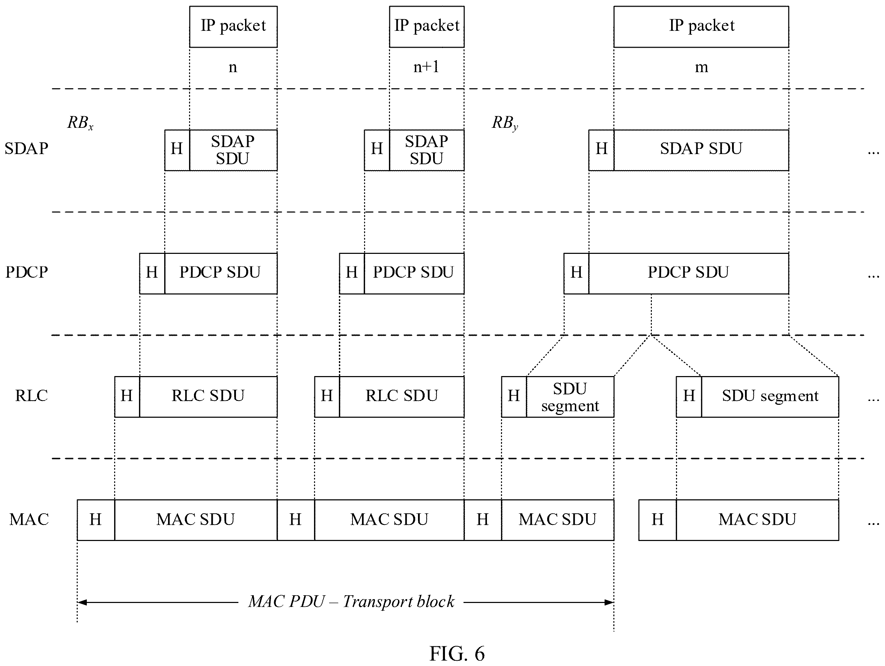

With reference to FIG. 6, the following describes in detail a relationship between a PDU and an SDU by using interaction between a terminal device and a base station as an example.

FIG. 6 is a diagram of a relationship between a PDU and an SDU at each protocol layer according to an embodiment of this application. As shown in FIG. 6, for a transmit end, after an RRC layer generates to-be-transmitted signaling (for example, an RRC message or an RRC PDU), or after an SDAP layer obtains to-be-transmitted data, the RRC layer may deliver the to-be-transmitted signaling to a corresponding PDCP layer, or the SDAP layer may deliver the to-be-transmitted data to the corresponding PDCP layer. For ease of description, the signaling is referred to as/replaced with data below. For data (for example, a PDCP SDU) received from the RRC layer or the SDAP layer, the PDCP layer may perform specific processing or may not perform processing to obtain a PDCP PDU, and then deliver the PDCP PDU to an RLC layer corresponding to the PDCP layer. For data (for example, an RLC SDU) received from the PDCP layer, the RLC layer may perform specific processing or may not perform processing to obtain an RLC PDU, and then deliver the RLC PDU to a corresponding MAC layer. For data (for example, a MAC SDU) received from the RLC layer, the MAC layer may perform specific processing or may not perform processing to obtain a MAC PDU, and then deliver the MAC PDU to a PHY layer. The PHY layer may perform specific processing or may not perform processing, and the PHY layer performs air interface transmission.

Correspondingly, for a receive end, after receiving data (for example, a transport block (transport block, TB)), a PHY layer delivers the data to a MAC layer. For data (for example, a TB or a MAC PDU) received from the PHY, the MAC layer may perform specific processing or may not perform processing to obtain a MAC SDU, and then deliver the MAC SDU to a corresponding RLC layer. For data (for example, an RLC PDU) received from the MAC layer, the RLC layer may perform specific processing or may not perform processing to obtain an RLC SDU, and then deliver the RLC SDU to a corresponding PDCP layer. For data (for example, a PDCP PDU) received from the RLC layer, the PDCP layer may perform specific processing or may not perform processing to obtain a PDCP SDU, and then deliver the PDCP SDU to an RRC layer or an SDAP layer. For data (for example, an RRC message or an RRC PDU) received from the PDCP layer, which may also be referred to as signaling, the RRC layer performs RRC decoding or ASN.1 decoding, to determine a meaning of the received data. Alternatively, for data (for example, an SDAP PDU) received from the PDCP layer, the SDAP layer may perform specific processing or may not perform processing to obtain an SDAP SDU, and then deliver the SDAP PDU to an upper layer (for example, an application layer).

For sending and receiving of data (or signaling), the data may be correspondingly encapsulated/processed at each layer, or may be transparently transmitted. For example, for the transmit end, data received by a layer from an upper layer of the layer is referred to as an SDU, and data delivered by the layer to a lower layer is referred to as a PDU. For the layer, the data received from the upper layer and the data delivered to the lower layer may be the same (for example, in transparent transmission), or may be different (for example, the data received from the upper layer is encapsulated/processed at the layer to obtain the data delivered to the lower layer). For example, data received by the PDCP layer from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU or a TB. For example, for the receive end, data received by a layer from a lower layer of the layer is referred to as a PDU, and data delivered by the layer to an upper layer is referred to as an SDU. For the layer, the data received from the lower layer and the data delivered to the upper layer may be the same (for example, in transparent transmission), or may be different (for example, the data received from the lower layer is processed at the layer to obtain the data delivered to the upper layer). For example, data received by the PDCP layer from a lower layer is referred to as a PDCP PDU, and data sent by the PDCP layer to an upper layer is referred to as a PDCP SDU; data received by the RLC layer from a lower layer is referred to as an RLC PDU, and data sent by the RLC layer to an upper layer is referred to as an RLC SDU; and data received by the MAC layer from a lower layer is referred to as a MAC PDU or a TB, and data sent by the MAC layer to an upper layer is referred to as a MAC SDU.

An upper layer and a lower layer in this embodiment of this application are relative concepts. For example, the RLC layer is used as an example. For the RRC layer, the RLC layer may be a lower layer of the RRC layer, but for the MAC layer, the RLC layer may be an upper layer of the MAC layer. For another example, a lower layer of the PDCP layer may include any one or more of the following: the PHY layer, the MAC layer, and the RLC layer. For another example, an upper layer of the PDCP layer may include any one or more of the following: the RRC layer, the SDAP layer, and the application layer.

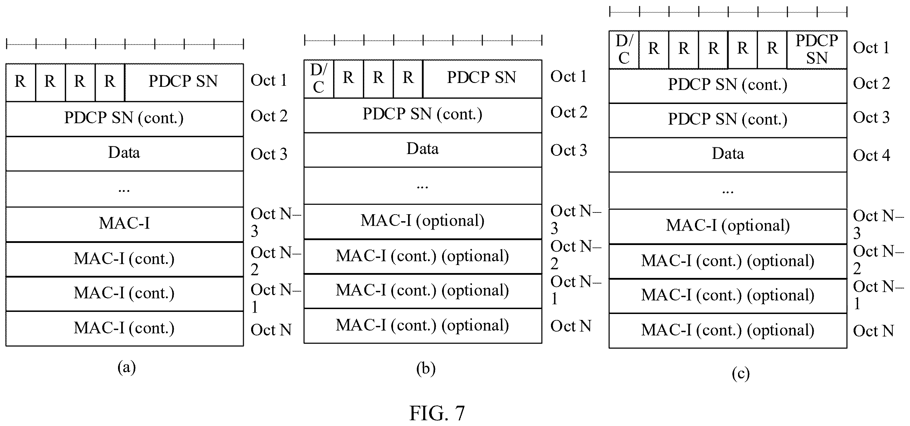

FIG. 7 is a diagram of PDCP PDUs according to an embodiment of this application. (a) in FIG. 7 shows a PDCP data PDU format of a signaling radio bearer (signaling radio bearer, SRB), (b) in FIG. 7 shows a PDCP data PDU format of a 12-bit PDCP SN, and (c) in FIG. 7 shows a PDCP data PDU format of a data radio bearer (data radio bearer, DRB) with an 18-bit PDCP SN.

For a transmit end, for data (for example, a PDCP SDU) received from an SDAP layer or an RRC layer, a PDCP layer may perform specific processing (for example, any one or more of header compression, encryption, integrity protection, and PDCP PDU header addition) or may not perform processing to obtain a PDCP PDU.

The PDCP PDU may include at least one of the following information (or fields): an SN, a reserved bit R, a PDU type, data, and a message authentication code for integrity (message authentication code for integrity, MAC-I).

For example, the SN field may be used to indicate information about an SN of the PDCP PDU or the PDCP SDU. For example, a quantity of bits (or a quantity of occupied bits) of the SN field may be 12 bits or 18 bits.

For example, the R field is a reserved bit.

For example, the PDU type field may indicate whether the PDCP PDU is a PDCP data PDU or a PDCP control PDU. For example, the PDU type may be represented by D/C. For example, a quantity of bits (or a quantity of occupied bits) of the PDCP type field may be 1 bit.

For example, the data field may include any one or more of the following: a PDCP service data unit (service data unit, SDU), a compressed PDCP SDU, and an uncompressed PDCP SDU. For example, the data may be represented by Data. For example, the data field may be represented by a Data field. It should be noted that data in the data field may be encrypted, or may not be encrypted. For example, any one or more of the PDCP SDU, the compressed PDCP SDU, and the uncompressed PDCP SDU may include user plane data and/or control plane data. For example, a quantity of bits (or a quantity of occupied bits) of the data field may be variable. For example, the quantity of bits (or the quantity of occupied bits) of the data field may be X bytes, or 8*Y bits, where X and/or Y may be positive integers/a positive integer.

For example, the MAC-I field may be used for integrity protection. For example, a quantity of bits (or a quantity of occupied bits) of the MAC-I field may be 32 bits.

For the PDCP layer, a PDU may be classified into two types: a data PDU (data PDU) and a control PDU (control PDU). The PDCP data PDU may carry control plane data and/or user plane data. The PDCP control PDU mainly carries any one or more of robust header compression (robust header compression, ROHC) feedback, ethernet header compression (ethernet header compression, EHC) feedback, and a PDCP status report.

### 4. PDCP operations:

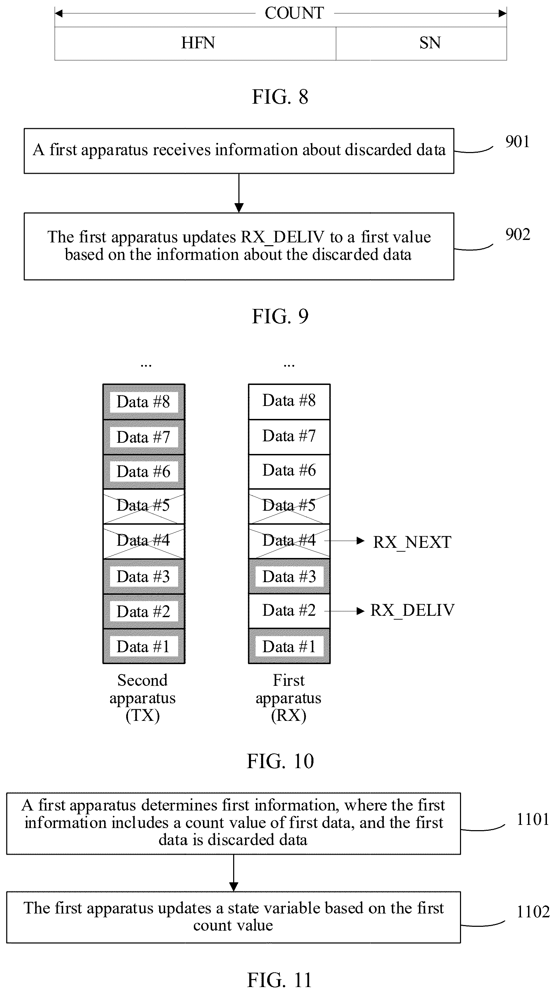

A COUNT may be used for one or more of the following functions: integrity protection and integrity check, encryption and decryption, header compression and decompression, in-order delivery, and duplicate discard. For example, after encrypting a data packet by using the COUNT, a transmit end sends the encrypted data packet to a receive end, and the receive end needs to decrypt the data packet based on the COUNT. It should be understood that, generally, one PDCP PDU is associated with one COUNT. For example, the COUNT is 32 bits. As shown in FIG. 8, the COUNT may include two parts: a hyper frame number (hyper frame number, HFN) of a high significant bit and a PDCP sequence number (sequence number, SN) of a low significant bit. A quantity of bits of the PDCP SN is configured by an upper layer (for example, an RRC layer) or a network device, and a quantity of bits of the HFN changes with the quantity of bits of the PDCP SN. For example, the quantity of bits of the PDCP SN may be 12 or 18. Correspondingly, the quantity of bits of the HFN may be 32-a PDCP SN size, where the PDCP SN size is the quantity of bits of the PDCP SN. For example, if the PDCP SN size is 12 bits, the quantity of bits of the HFN is 32-12, that is, 20.

To avoid air interface overheads, the PDCP PDU does not include a complete COUNT, and includes only a least significant bit (that is, an SN) of the COUNT.

For example, RCVD_HFN is an HFN of a received PDCP data PDU calculated by a receiving PDCP entity.

For example, RCVD_SN is a PDCP SN of the received PDCP data PDU, and is carried in a PDU header.

For example, RCVD_COUNT is a count value of the received PDCP data PDU, that is, COUNT=[RCVD_HFN, RCVD_SN].

For example, a reordering window may include/be replaced with a receiving window, a PDCP window, or a PDCP receiving window.

For example, RX_DELIV is a state variable that indicates a COUNT value of a 1^{st} PDCP SDU that is not delivered to an upper layer but still waits to be delivered. For example, an initial value of RX_DELIV may be 0. For example, RX_DELIV may also be understood as a lower limit of the reordering window.

For example, RX_NEXT indicates a COUNT value of a next PDCP SDU that is expected to be received. For example, an initial value of RX_NEXT is 0.

For example, RX_REORD indicates a COUNT value greater than a COUNT value associated with a PDCP data PDU that triggers a t-Reordering.

For example, the t-Reordering is configured to detect a loss of a PDCP data PDU. For example, if the t-Reordering is running, the t-Reordering should not be started additionally. It may be understood that one receiving PDCP entity cannot simultaneously initiate a plurality of t-Reorderings; or in a given period of time, one receiving PDCP entity runs only one t-Reordering. Optionally, duration of the t-Reordering is configured by the RRC layer or a network device.

### 4.1. Operations performed after a PDCP data PDU is received:

After receiving a PDCP data PDU, a receive end (for example, a receiving PDCP entity) needs to calculate an HFN to obtain a COUNT. For example, a method for calculating the HFN by the receive end may include any one or more of the following.

If a PDCP SN of the PDCP data PDU<(an SN part of RX_DELIV-a reordering window size), the HFN of the PDCP data PDU=an HFN part of RX_DELIV+1.

If the PDCP SN of the PDCP data PDU≥(an SN part of RX_DELIV+the reordering window size), or if the PDCP SN of the PDCP data PDU≥(the SN part of RX_DELIV-the reordering window size) and the PDCP SN of the PDCP data PDU≥(the SN part of RX_DELIV+the reordering window size), the HFN of the PDCP data PDU=the HFN part of RX _DELIV-1.

If the PDCP SN of the PDCP data PDU≥(the SN part of RX_DELIV-the reordering window size) and/or the PDCP SN of the PDCP data PDU<(the SN part of RX_DELIV+the reordering window size), the HFN of the PDCP data PDU=the HFN part of RX_DELIV.

For example, the reordering window size is equal to 2^{(X-1)}, and X represents a quantity of bits corresponding to an SN. For example, RX_DELIV indicates a COUNT of a 1^{st} PDCP SDU that is not delivered to an upper layer but still waits to be delivered. For example, an initial value of RX_DELIV is 0. In addition, "≥" represents "greater than or equal to".

The receive end (for example, the receiving PDCP entity) determines a COUNT of the PDCP data PDU based on the calculated PDCP HFN of the PDCP data PDU and the PDCP SN of the PDCP data PDU, where the COUNT may be referred to as RCVD_COUNT.

For example, after determining the COUNT of the PDCP data PDU, the receive end (for example, the receiving PDCP entity) may perform one or either of the following:
(1) performing decryption and integrity verification on the PDCP data PDU by using COUNT=RCVD_COUNT; and if the integrity verification fails, indicating an integrity verification failure to the upper layer (for example, an RRC layer), and/or discarding the PDCP data PDU; and
(2) if RCVD _COUNT<RX_DELIV, or if a PDCP data PDU with a COUNT=RCVD_COUNT has been received before, discarding the PDCP data PDU.

If the received PDCP data PDU with the COUNT value=RCVD_COUNT is not discarded based on the above determining, the receive end (for example, the receiving PDCP entity) may perform one or more of the following:
an operation (1): storing the resulting PDCP SDU in a receiving buffer;
an operation (2): if RCVD_COUNT≥RX_NEXT, updating RX_NEXT to RCVD_COUNT+1;
an operation (3): if RCVD_COUNT=RX_DELIV, delivering all stored PDCP SDUs with consecutive associated COUNT values starting from COUNT=RX _DELIV to the upper layer in ascending order of the COUNT values (optionally, delivering the PDCP SDUs after header decompression is performed if decompression is not performed before); and/or updating RX_DELIV to the COUNT value of the 1^{st} PDCP SDU that has not been delivered to the upper layer, where the COUNT value of the 1^{st} PDCP SDU>RX_DELIV;
an operation (4): if a t-Reordering is running and RX_DELIV≥RX_REORD, stopping (or stopping and resetting) the t-Reordering; and
an operation (5): if the t-Reordering is not running (where a case in which the t-Reordering is stopped due to the foregoing operation is included), and RX_DELIV<RX_NEXT, updating RX_REORD to RX_NEXT, and starting the t-Reordering.

For example, for the descriptions of the foregoing operation (1) to operation (5), it can be learned that in the operation (1), that the receive end stores the received PDCP PDU in the buffer has impact on the in-order delivery and/or the update of RX_DELIV in the operation (3).

### 4.2. Operations when a t-Reordering expires:

If the t-Reordering expires, a receive end (for example, a receiving PDCP entity) may perform one or more of the following:
(1) if header decompression is not performed before, after header decompression is performed, delivering the following PDCP SDUs to an upper layer in ascending order of COUNTs of the PDCP SDUs in a buffer: all stored PDCP SDUs with associated COUNTs<RX_REORD, and/or all stored PDCP SDUs with consecutive associated COUNTs starting from RX_REORD;
(2) updating RX_DELIV to a COUNT of a 1^{st} PDCP SDU that has not been delivered to the upper layer, where the COUNT of the 1^{st} PDCP SDU≥RX_REORD; and
(3) if RX_DELIV<RX_NEXT, updating RX_REORD to RX_NEXT, and starting the t-Reordering.

For example, after receiving the PDCP PDU, the receive end first determines the COUNT of the PDCP PDU, and determines, based on the COUNT of the PDCP PDU, whether to discard the PDCP PDU. If the receive end determines not to discard the PDCP PDU, the receive end further performs a reordering process based on a relationship between the COUNT of the PDCP PDU and a state variable (for example, RX_NEXT and/or RX_DELIV). The reordering process may include update of the state variable and/or data delivery.

It should be noted that for PDCP-related content, refer to 3GPP TS 38.323: "NR; Packet Data Convergence Protocol (PDCP) protocol specification". Details are not described herein.

From a perspective of a transmit end, in some cases, the transmit end may discard some (or a specific) data. For example, if some data is not completely transmitted or is not transmitted after a delay requirement of the data is met, the transmit end may discard the data, in other words, the transmit end does not continue to send the data. For another example, in a case of network congestion, the transmit end may discard some data. In this case, according to the technology described above, a PDCP window (or RX_DELIV) of the receive end may be stuck for a period of time due to discarded data, and the PDCP window does not move until the t-Reordering expires. This may increase a delay in delivering data from a PDCP layer to an upper layer.

For example, any one or more of the following: a packet delay budget (packet delay budget, PDB), a PDU set delay budget (PDU set delay budget, PSDB), and a timer related to data discarding may be considered for the delay requirement.

When the transmit end discards data, the receive end may need to continue to wait for data before the discarded data, for example, in the following scenarios.

Scenario 1: In a case of network congestion, the transmit end discards data #1 (for example, unimportant data), but does not discard data (for example, data #2, for example, important data) before the data #1, and a delay requirement of the data before the data #1 may not be exceeded/met. The receive end needs to continue to receive (or wait for) the data before the data #1.

For example, for communication between a network device and a terminal device, network congestion may be indicated by the network device to the terminal device, or may be determined by the terminal device/network device through detection, or may be reported by the terminal device to the network device. This is not limited in this application. For example, for communication between terminal devices, network congestion may be indicated by the terminal device to the terminal device, or may be determined by the terminal device through detection, or may be indicated by the network device to the terminal device, or may be reported by the terminal device to the network device. This is not specifically limited in this application.

Scenario 2: When a delay requirement of a data packet is exceeded/met, assuming that different data packets correspond to different discard time (discard timer), and a delay requirement of data #1 is exceeded, the transmit end discards the data #1. A delay requirement of data (for example, data #2) before the data #1 is not exceeded and the data is not discarded. The receive end needs to continue to receive (or wait for) the data before the data #1.

For the foregoing scenario 1 and scenario 2, the transmit end determines to discard the data, and the receive end may need to continue to receive (or wait for) the data before the discarded data. The following describes in detail a communication method provided in embodiments of this application with reference to the accompanying drawings. In embodiments of this application, an example in which a first apparatus is a receive end is used to describe the method in embodiments of this application.

FIG. 9 is a schematic flowchart of a communication method according to an embodiment of this application. As shown in FIG. 9, the following steps are included.

901: A first apparatus receives information about discarded data.

In a possible implementation, the first apparatus may receive the information about the discarded data from a transmit end, and the information about the discarded data may be sent to the first apparatus by using a PDCP control (control) PDU.

902: The first apparatus updates RX_DELIV to a first value.

The first value may be equal to a largest COUNT of the discarded data plus 1, or the first value may be greater than the largest COUNT of the discarded data plus 1.

In an example, it is assumed that the discarded data includes data #1, data #2, and data #3, a COUNT of the data #1 is 3, a COUNT of the data #2 is 4, and a COUNT of the data #3 is 5. The largest COUNT of the discarded data is 5, and therefore, the first apparatus updates RX_DELIV to 5+1, that is, updates RX_DELIV to 6.

In another example, assuming that the discarded data includes only data #1, and a COUNT of the data #1 is 9, the first apparatus updates RX_DELIV to 9+1, that is, updates RX_DELIV to 10.

It should be understood that, the first apparatus updates RX_DELIV to the first value. Even if the first apparatus subsequently receives data whose count value is less than the first value, because a COUNT of the received data is less than RX_DELIV, the first apparatus still discards the data.

In an example, it is assumed that the first apparatus updates RX_DELIV to 8 based on the information about the discarded data. Before receiving the information about the discarded data, the first apparatus does not receive data whose COUNT is equal to 4. Later, the first apparatus receives the data whose COUNT is equal to 4, and the first apparatus still discards the data.

In another example, as shown in FIG. 10, the first apparatus is a receive end (RX), the second apparatus is a transmit end (TX), RX_DELIV of the first apparatus corresponds to a COUNT (for example, 2) of data #2, and RX_NEXT corresponds to a COUNT (for example, 4) of data #4. The first apparatus receives information about discarded data sent by the second apparatus, where the information about discarded data includes the data #4 and data #5. According to the method shown in FIG. 9, the first apparatus directly updates RX_DELIV to a COUNT (for example, 6) of data #6. Subsequently, if the first apparatus receives the data #2, the first apparatus still discards the data #2.

According to the method shown in FIG. 9, after receiving the information about the discarded data, the first apparatus directly updates RX_DELIV to a value greater than or equal to a largest COUNT+1 in the discarded data. For data whose count value is less than a smallest COUNT in the discarded data, even if the first apparatus subsequently receives the corresponding data, the first apparatus still discards the corresponding data, causing a problem of a data packet loss.

For the technical problem existing in FIG. 9, an embodiment of this application provides a communication method, to resolve the problem of the data packet loss caused by update of a state variable by the first apparatus in a scenario in which the first apparatus receives the information about the discarded data.

FIG. 11 is a schematic block flowchart of another communication method according to an embodiment of this application.

1101: A first apparatus determines first information.

For example, in this application, the "determining" may include/be replaced with: "obtaining" or "receiving".

Optionally, the first information may include information about a count value of first data.

For example, the first data includes/is discarded data, or data discarded by a second apparatus.

For example, the first apparatus is a receive end, and the second apparatus is a transmit end. For example, the first apparatus may be a terminal device, and the second apparatus may be a network device. Alternatively, for example, the first apparatus may be a network device, and the second apparatus may be a terminal device. Alternatively, for example, the first apparatus may be a terminal device, and the second apparatus may be a terminal device.

In an example, the second apparatus may discard the first data due to network congestion, or the second apparatus may discard the first data because a delay requirement of the first data is exceeded/met, or the second apparatus may discard the first data due to another reason. This is not specifically limited in this application.

For example, in this application, the data may include/be replaced with a PDCP PDU, a PDCP data PDU, or a PDCP SDU.

For example, the count value of the first data may also be referred to as a first count value, a first COUNT, or another name. This is not specifically limited in this application.

For example, the first data is associated with a first PDCP entity and/or a first RB.

Optionally, before step 1101, this application further includes 1100: The first apparatus obtains second information.

For example, in this application, "obtaining" may include/be replaced with "receiving".

For example, that the first apparatus obtains the second information may include any one or more of the following: A PDCP layer of the first apparatus obtains the second information; or a PDCP layer of the first apparatus receives/obtains the second information from a lower layer (for example, an RLC layer); or the first apparatus obtains the second information from the second apparatus, and correspondingly, the second apparatus sends the second information to the first apparatus.

Optionally, the second information may include information about an SN of the first data or information about the first count value.

For example, in this application, the SN may include/be replaced with a PDCP SN. For example, the SN of the first data may include/be replaced with a PDCP SN of the first data.

Optionally, that the first apparatus determines the first information may include: The first apparatus determines the first count value based on any one or more of the SN of the first data, a first state variable (or an SN of the first state variable), and a first parameter.

For example, the SN of the first state variable may include/be replaced with an SN part of the first state variable.

Optionally, the first state variable indicates a count value of a 1^{st} data that waits to be delivered, or a count value of a 1^{st} data that is not delivered and that waits to be delivered, or a count value of a 1^{st} data that waits to be received, or a count value of a 1^{st} data that is not received and that waits to be received, or a count value of a 1^{st} data that is not received and that waits to be delivered. For example, the first state variable may include RX_DELIV. For example, the first state variable is RX_DELIV. For example, RX_DELIV may indicate a COUNT of a 1^{st} PDCP PDU that is not delivered to an upper layer and that waits to be delivered. For example, RX_DELIV may be understood as a lower limit of a reordering window. For example, the reordering window may include/be replaced with a receiving window, a PDCP window, or a PDCP receiving window.

Optionally, the first parameter may be a reordering window size (or 2^{(X-1)}). For example, X represents a quantity of bits of an SN.

For example, the upper layer may include an SDAP layer or an RRC layer.

For example, any one or more of the first state variable, the first parameter, and X are associated with the first PDCP entity and/or the first RB.

For example, the first apparatus determines an HFN of the first data based on any one or more of the following.
(1) If the SN of the first data<(the SN of the first state variable the first parameter), the HFN of the first data=the HFN of the first state variable+1.
(2) If the SN of the first data≥(the SN of the first state variable+the first parameter), or if the SN of the first data≥(the SN of the first state variable the first parameter) and the SN of the first data≥(the SN of the first state variable+the first parameter), the HFN of the first data=the HFN of the first state variable-1.
(3) If the SN of the first data≥(the SN of the first state variable the first parameter) and/or the SN of the first data<(the SN of the first state variable+the first parameter), the HFN of the first data=the HFN of the first state variable.

For example, the first apparatus obtains the first count value based on the SN of the first data and the HFN of the first data.

For example, if the first apparatus obtains the first count value, the first apparatus may directly determine the first information.

Optionally, the first information may include information about a count value of at least one data.

For example, the count value of the at least one data may include/be replaced with one or more of the following: a start count value of the at least one data, an end count value of the at least one data, and a count value or count values of one or more data included in the at least one data.

For example, the at least one data may include/be replaced with a first data set. For example, the at least one data includes/is discarded data, or data discarded by the second apparatus. For example, each of the at least one data is discarded data.

For example, the at least one data may include the first data. Optionally, the first data may be any one of the at least one data. For example, the first data is data with a smallest count value in the at least one data, or the first data is data with a largest count value in the at least one data, or the first data is data with an intermediate count value in the at least one data. This is not specifically limited in this application.

Optionally, count values of all the data in the at least one data may be consecutive, or may be inconsecutive. This is not limited.

For example, the at least one data is associated with the first PDCP entity and/or the first RB.

Optionally, the second information may include one or more of the following information of the at least one data: a start SN, an end SN, the start count value, the end count value, a first quantity, an SN or SNs of one or more included data, and a count value or count values of one or more included data.

Optionally, the start SN of the at least one data may be an SN of data with a smallest count value in the at least one data, or an SN of data with a smallest SN in the at least one data. It should be noted that the start SN of the at least one data is not necessarily the SN of the data with the smallest SN in the at least one data, or the start SN of the at least one data is not necessarily less than or equal to an SN of each of the at least one data.

Optionally, the end SN of the at least one data may be an SN of data with a largest count value in the at least one data, or an SN of data with a largest SN in the at least one data. It should be noted that the end SN of the at least one data is not necessarily the SN of the data with the largest SN in the at least one data, or the end SN of the at least one data is not necessarily greater than or equal to the SN of each of the at least one data.

Optionally, the start count value of the at least one data may be a count value of data with a smallest count value in the at least one data.

Optionally, the end count value of the at least one data may be a count value of data with a largest count value in the at least one data.

For example, the "one or more included data" may include/be replaced with a part or all of included data.

For example, the first quantity is a quantity of data in the at least one data.

In an example, the at least one data includes data #1, data #2, and data #3. The first quantity of the at least one data is 3. Assuming that the quantity of bits of the SN is equal to 12, a count value of the data #1 is 4095, an HFN and an SN of the data #1 are respectively 0 and 4095, a count value of the data #2 is 4096, an HFN and an SN of the data #1 are respectively 1 and 0, a count value of the data #3 is 4097, and an HFN and an SN of the data #3 are respectively 1 and 1, the start count value of the at least one data is 4095 and the end count value is 4097, the start SN of the at least one data is 1, and the end SN is 0.

In an example, the at least one data includes data #1, data #2, and data #3. The first quantity of the at least one data is 3. Assuming that count values of the data #1, the data #2, and the data #3 are respectively 6, 8, and 9, the start count value of the at least one data is 6, and the end count value is 9. For example, assuming that SNs of the data #1, the data #2, and the data #3 are respectively 1, 2, and 3, the start SN of the at least one data is 1, and the end SN is 3.

In a possible implementation, after the first apparatus obtains the second information, the first apparatus may determine the count value of the at least one data.

Optionally, that the first apparatus determines the first information may include: The first apparatus may determine the start count value of the at least one data based on any one or more of the start SN of the at least one data, the first state variable (or the SN of the first state variable), and the first parameter.

Optionally, that the first apparatus determines the first information may include: The first apparatus may determine the end count value of the at least one data based on any one or more of the end SN of the at least one data, the first state variable (or the SN of the first state variable), and the first parameter.

Optionally, that the first apparatus determines the first information may include: The first apparatus may determine, based on any one or more of the SN or SNs of the one or more data included in the at least one data, the first state variable (or the SN of the first state variable), and the first parameter, the count value or count values of the one or more data included in the at least one data.

In another example, assuming that the first apparatus obtains the start SN and the first quantity of the at least one data, the first apparatus may determine the start count value of the at least one data based on any one or more of the start SN, the first state variable (or the SN of the first state variable), and the first parameter, and determine a count value or count values (for example, an end count value or end count values) of any one or more data (or other part or all data) in the at least one data based on the start count value and the first quantity of the at least one data.

For example, the at least one data includes data #1, data #2, and data #3. The first quantity of the at least one data is 3. It is assumed that the first apparatus obtains the start SN (for example, 4095) and the first quantity (for example, 3) of the at least one data. It is assumed that the first apparatus determines that the start count value of the at least one data is 4095 based on any one or more of the start SN (for example, 4095), the first state variable (or the SN of the first state variable), and the first parameter of the at least one data. Then, the first apparatus determines, based on the start count value (for example, 4095) and the first quantity (for example, 3) of the at least one data, that count values of other data (for example, another two data) are respectively 4096 (for example, 4095+1) and 4097 (for example, 4095+2, or 4096+1).

1102: The first apparatus updates a state variable based on the first count value, the count value of the at least one data, or the count value or count values of the one or more data in the at least one data.

For example, after determining the first information, the first apparatus updates the state variable based on the first count value, the count value of the at least one data, or the count value or count values of the one or more data in the at least one data that are included in the first information.

For example, update of the state variable may include/be replaced with reordering, or a reordering process, or update of a PDCP window.

Optionally, this application further includes 1103: The first apparatus considers the first data or the at least one data as having been received by the first apparatus.

Optionally, "considered as having been received by the first apparatus" may include/be replaced with: considered as having been received by the first apparatus and stored in a buffer by the first apparatus.

For example, step 1103 may be performed before or after step 1102, or may be performed simultaneously with step 1102. This is not limited in this application.

In a possible implementation, the first apparatus determines the first information, and the first apparatus considers the first data or the at least one data as having been received by the first apparatus, and updates the state variable based on the first count value, the count value of the at least one data, or the count value or count values of the one or more data in the at least one data.

Optionally, if a first condition is met, the first apparatus performs step 1103.

Optionally, if a first condition is met, the first apparatus performs step 1102.

For example, the first condition may include: The first state variable is less than or equal to the first count value (or the start count value of the at least one data, or the end count value of the at least one data, or any count value of the at least one data).

For example, any count value of the at least one data may include/be replaced with a (for example, one or any one) count value of the at least one data, or a count value of one (for example, one or any one) of the at least one data.

In an example, it is assumed that the first state variable is 3, and a count value of the data #1 is 6. The first apparatus determines that the first information includes the count value of the data #1, where the data #1 is discarded data. The first state variable is less than the count value of the data #1, that is, 3<6, and the first apparatus considers the data #1 as having been received by the first apparatus. The first apparatus updates the state variable based on the count value of the data #1.

In an example, it is assumed that the first state variable is 3, and a count value of the data #1 is 6. The first apparatus determines that the first information includes the count value of the data #1, where the data #1 is discarded data. The first state variable is less than the count value of the data #1, that is, 3<6, and the first apparatus updates the state variable based on the count value of the data #1.

Optionally, that the first apparatus updates the state variable based on the first count value, the count value of the at least one data, or the count value or count values of the one or more data in the at least one data may include/be replaced with any one or more of an operation A, an operation B, an operation C, an operation D, and an operation E.

Operation A: If the first count value (or the start count value of the at least one data, or the end count value of the at least one data, or any count value of the at least one data) is greater than or equal to a second state variable, the first apparatus updates the second state variable to a sum of the first count value (or the start count value of the at least one data, or the end count value of the at least one data, or any count value of the at least one data) and 1. Alternatively, if the first count value (or the start count value of the at least one data, or the end count value of the at least one data, or any count value of the at least one data) is greater than or equal to the second state variable, the first apparatus updates the second state variable to a sum of the first count value (or the start count value of the at least one data) and the first quantity.

Optionally, the second state variable indicates a count value of a next data that is expected to be received. For example, the second state variable may include RX_NEXT. For example, the second state variable is RX_NEXT. For example, RX_NEXT may indicate a COUNT of a next PDCP PDU that is expected to be received. For example, RX_NEXT may be understood as a count value of data that is received/considered as being received and that has a largest count value plus 1.

In an example, assuming that the first count value is 6, the second state variable is 3, and the first count value is greater than the second state variable, the first apparatus updates the second state variable to 6+1, that is, the second state variable is updated to 7.

In a possible implementation, the first information includes the count value of the at least one data. If the count value of the at least one data is greater than or equal to the second state variable, or if the start count value of the at least one data is greater than or equal to the second state variable, the first apparatus may update the second state variable based on a count value of each of the at least one data. For example, if the first quantity is 3, the first apparatus may update the second state variable three times.

For example, it is assumed that the second state variable is RX_NEXT, and RX_NEXT is 2. The first information determined by the first apparatus includes the count value of the at least one data. The at least one data includes data #1, data #2, and data #3. A COUNT of the data #1 is 3, a COUNT of the data #2 is 4, and a COUNT of the data #3 is 5. The first apparatus updates the second state variable based on a COUNT of each data. When the COUNT of the data #1 is 3, where 3>2, RX_NEXT is updated to the COUNT of the data #1+1, that is, RX_NEXT is updated to 4. When the COUNT of the data #2 is 4, where 4=4, RX_NEXT is updated to the COUNT of the data #2+1, that is, RX_NEXT is updated to 5. When the COUNT of the data #3 is 5, where 5=5, RX_NEXT is updated to the COUNT of the data #3+1, that is, RX_NEXT is updated to 6.

In another possible implementation, the first information includes the count value of the at least one data. If the count value of the at least one data is greater than or equal to the second state variable, or if the start count value of the at least one data is greater than or equal to the second state variable, or if the end count value of the at least one data is greater than or equal to the second state variable, the first apparatus may update the second state variable based on the start count value or the end count value of the at least one data. For example, if the first quantity is 3, the first apparatus may update the second state variable once.

For example, it is assumed that the second state variable is RX_NEXT, and RX_NEXT is 2. The first information determined by the first apparatus includes the count value of the at least one data. The at least one data includes data #1, data #2, and data #3. The first quantity is 3. A COUNT of the data #1 is 3, a COUNT of the data #2 is 4, and a COUNT of the data #3 is 5. The first apparatus updates the second state variable based on the start count value (for example, 3) or the end count value (for example, 5) of the at least one data. For example, if the start count value of the at least one data is 3, where 3>2, RX_NEXT is updated to the start count value (the COUNT of the data #1) of the at least one data plus 3, or RX_NEXT is updated to the end count value (the COUNT of the data #3) of the at least one data plus 1, that is, RX_NEXT is updated to 6. For example, if the end count value of the at least one data is 5, where 5>2, RX_NEXT is updated to the start count value (the COUNT of the data #1) of the at least one data plus 3, or RX_NEXT is updated to the end count value (the COUNT of the data #3) of the at least one data plus 1, that is, RX_NEXT is updated to 6.

Optionally, the first information may further include information about the first quantity.

For example, the first data is data with a smallest count value in the at least one data, and the first count value is greater than or equal to the second state variable. The first apparatus may directly update the second state variable based on the first count value and the first quantity, without updating the second state variable based on the COUNT of each of the at least one data.

Operation B: If the first count value (or the start count value of the at least one data, or the end count value of the at least one data, or any count value of the at least one data) is equal to the first state variable, the first apparatus delivers the at least one third data.

For example, the delivery may include/be replaced with delivery to an upper layer or an upper layer of the first apparatus.

For example, the third data may include any one or more of the following: data received by the first apparatus or a PDCP layer of the first apparatus, data that is not delivered by the first apparatus or the PDCP layer of the first apparatus, and data that exists/is stored in a receiving buffer of the first apparatus or the PDCP layer of the first apparatus.

For example, a count value corresponding to the third data is greater than or equal to the first state variable.

For example, count values of the at least one third data may be consecutive.

For example, the at least one third data may not include discarded data, or data that is considered as having been received by the first apparatus.

For example, excluding the discarded data (or the data that is considered as having been received by the first apparatus), count values of the at least one third data may be consecutive.

For example, the at least one third data may include any one or more of the following: data that has been received, that is not delivered, and whose count value is greater than or equal to the first state variable; data that exists/is stored in the receiving buffer of the first apparatus or the PDCP layer of the first apparatus and whose count value is greater than or equal to the first state variable; data whose count value is greater than or equal to the first state variable and that is received (or considered as being received) consecutively/stored (or considered as being stored) consecutively; data that is received (or considered as being received) consecutively/stored (or considered as being stored) in order and whose count value is greater than or equal to the first state variable; data that is received (or considered as being received) consecutively/stored (or considered as being stored) consecutively starting from the first state variable; excluding the discarded data (or the data that is considered as having been received by the first apparatus), data whose count value is greater than or equal to the first state variable and that is received (or considered as being received) consecutively/stored (or considered as being stored) consecutively; excluding the discarded data (or the data that is considered as having been received by the first apparatus), data that is received (or considered as being received) consecutively/stored (or considered as being stored) in order and whose count value is greater than or equal to the first state variable; and excluding the discarded data (or the data that is considered as having been received by the first apparatus), data that is received (or considered as being received) consecutively/stored (or considered as being stored) consecutively starting from the first state variable.

It should be noted that, the "data received consecutively" is not limited to a case in which the first apparatus consecutively receives the data in sequence, but is merely intended to indicate that COUNT values of the received data are consecutive. Optionally, the data received consecutively is data with consecutive count values. This does not mean that the data is consecutively received by the first apparatus or at the PDCP layer of the first apparatus.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. If the first count value is equal to the first state variable, the first apparatus may deliver the data #5 and the data #6 to an upper layer.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. A COUNT of data that is considered as having been received by the first apparatus is 7. If the first count value is equal to the first state variable, the first apparatus may deliver the data #5, the data #6, and the data #7 to an upper layer.

In a possible implementation, after the first apparatus delivers the at least one third data, the first apparatus may further update the first state variable to a fourth count value.

Operation E: If the first count value (or the start count value of the at least one data, or the end count value of the at least one data, or any count value of the at least one data) is equal to the first state variable, the first apparatus updates the first state variable to the fourth count value.

Optionally, the fourth count value is greater than the first state variable.

Optionally, data corresponding to the fourth count value is not received by the first apparatus.

Optionally, the data corresponding to the fourth count value does not include/is not discarded data, or data that is considered as having been received by the first apparatus.

For example, that the data corresponding to the fourth count value is not received by the first apparatus may include/be replaced with either or both of the following: The data corresponding to the fourth count value has not been delivered to the upper layer, and the data corresponding to the fourth count value does not exist/is not stored in the receiving buffer of the first apparatus or the PDCP layer of the first apparatus.

For example, the data corresponding to the fourth count value may include/be replaced with a PDCP SDU or a PDCP PDU corresponding to the fourth count value.

Optionally, the data corresponding to the fourth count value is a 1^{st} data that is not received and whose count value is greater than the first state variable. Optionally, excluding the discarded data (or the data that is considered as having been received by the first apparatus), the data corresponding to the fourth count value is a 1^{st} data that is not received and whose count value is greater than the first state variable.

For example, the 1^{st} data that is not received and whose count value is greater than the first state variable may include/be replaced with either or both of the following: a 1^{st} data that has not been delivered to the upper layer and whose count value is greater than the first state variable, and a 1^{st} data that does not exist/is not stored in the receiving buffer of the first apparatus or the PDCP layer of the first apparatus and whose count value is greater than the first state variable.

For example, excluding the discarded data (or the data that is considered as having been received by the first apparatus), the 1^{st} data that is not received and whose count value is greater than the first state variable may include/be replaced with either or both of the following: excluding the discarded data (or the data that is considered as having been received by the first apparatus), a 1^{st} data that has not been delivered to the upper layer and whose count value is greater than the first state variable, and excluding the discarded data (or the data that is considered as having been received by the first apparatus), a 1^{st} data that does not exist/is not stored in the receiving buffer of the first apparatus or the PDCP layer of the first apparatus and whose count value is greater than the first state variable.

For example, the first apparatus updates the first state variable to a COUNT of the 1^{st} data (for example, a PDCP SDU) that has not been delivered to the upper layer, and the COUNT of the 1^{st} data is greater than the first state variable. For example, the first apparatus updates the first state variable to a 1^{st} empty after the first state variable. For example, the first apparatus updates the first state variable to a 1^{st} empty after the first state variable, excluding the discarded data (or the data that is considered as having been received by the first apparatus).

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. If the first count value is equal to the first state variable, the first apparatus delivers the data #5 and the data #6 to an upper layer. The first apparatus determines that a COUNT of a 1^{st} PDCP SDU that is not delivered to the upper layer is 7, and the first apparatus updates the first state variable RX_DELIV from 4 to 7.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. A COUNT of data that is considered as having been received by the first apparatus is 7. If the first count value is equal to the first state variable, the first apparatus delivers the data #5, the data #6, and the data #7 to an upper layer. The first apparatus updates the first state variable RX_DELIV from 4 to 9.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 7. A COUNT of data that is considered as having been received by the first apparatus is 8. If the first count value is equal to the first state variable, the first apparatus delivers the data #5, the data #6, and the data #7 to an upper layer. The first apparatus updates the first state variable RX_DELIV from 4 to 9.

Operation C: When a reordering timer is running, and the first state variable is greater than or equal to a third state variable, the first apparatus stops the reordering timer.

For example, "when the reordering timer is running" may include/be replaced with "if the reordering timer is running".

For example, stopping may include stopping and resetting.

For example, the reordering timer is configured to detect a data loss. For example, the reordering timer may be a t-Reordering.

For example, the third state variable indicates a sum of a count value of data that triggers the reordering timer and 1. For example, the third state variable may include RX_REORD. For example, the third state variable is RX_REORD.

In an example, assuming that the first state variable is 4 and the third state variable is 2, it indicates that the first apparatus has received or does not need to receive data whose count value is less than the first state variable. The first apparatus stops the reordering timer.

In a possible implementation, the first apparatus determines that the first state variable is greater than or equal to the third state variable, and the first apparatus stops and resets the reordering timer.

In an example, it is assumed that the first state variable is 4, the third state variable is 2, and the first state variable is greater than the third state variable. The first apparatus stops the reordering timer.

Operation D: When the reordering timer is not running, and the first state variable is less than the second state variable, the first apparatus starts the reordering timer, and/or the first apparatus updates the third state variable to the second state variable.

For example, "when the reordering timer is not running" may include/be replaced with "if the reordering timer is not running".

In an example, when the reordering timer is not running, assuming that the first state variable is 4 and the second state variable is 7, it indicates that the first apparatus receives data whose count value is 6, there is a case in which the first apparatus does not receive data whose count value is less than 6, where the case may be referred to as a case in which there is a empty, and the first apparatus starts the reordering timer.

In another example, the first apparatus starts the reordering timer when the first state variable is less than the second state variable. The first apparatus may further update the third state variable RX_REORD to RX_NEXT. For example, the first apparatus updates RX_REORD to 7.

It should be understood that the above lists possible operations that may be implemented by the first apparatus when the first apparatus updates the state variable based on the first count value. A sequence relationship between the foregoing operations A, B, C, D, and E is not limited. The first apparatus may perform one or more of the operations A, B, C, D, and E. This is not specifically limited in this application. For example, the operation B is performed before the operation E. For example, the operation E is performed before the operation C. For example, the operation C is performed before the operation D. For example, the operation A is performed before the operation D. For example, the first apparatus updates the state variable based on a relationship between one or more of the first count value (or the start count value of the at least one data, or the end count value of the at least one data, or any count value of the at least one data), the first state variable, the second state variable, and the third state variable.

For example, the at least one data includes three data, and the first apparatus may perform step 1102 once, or the first apparatus may perform step 1102 three times.

According to the method shown in FIG. 11, the first apparatus determines the count value of the first data, and updates the state variable based on the first count value. The first data is the discarded data, and the first apparatus updates the state variable based on the count value of the discarded data, to provide a state update method, so as to effectively avoid a problem that a PDCP window (or RX_DELIV) of a receive end may be stuck due to the discarded data, reduce a delay in delivering data by the PDCP layer to the upper layer, effectively avoid a problem of a data packet loss, and improve transmission reliability.

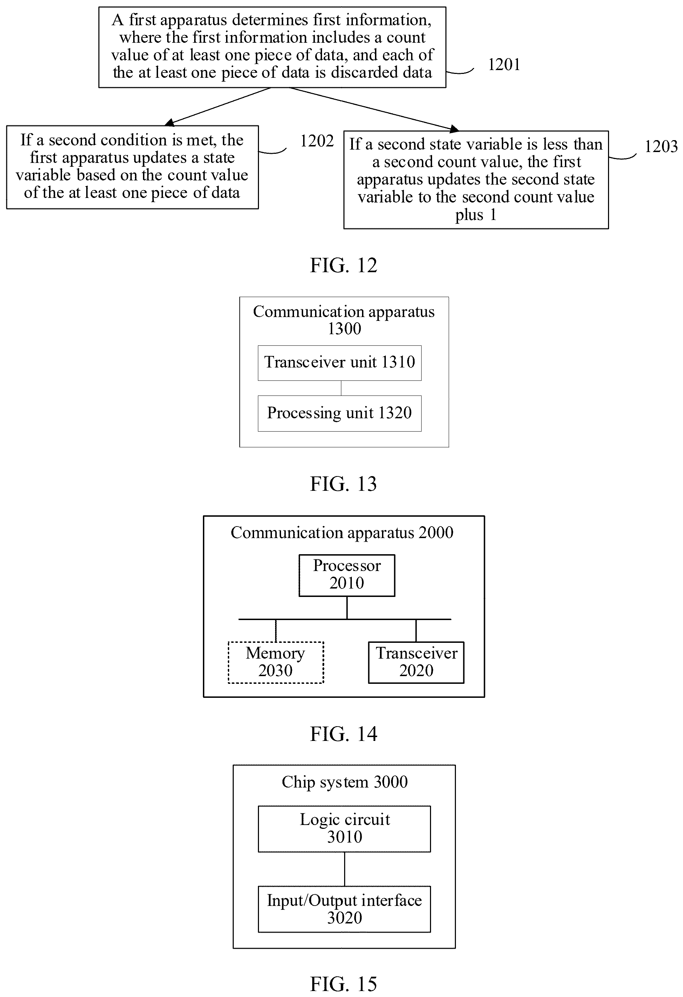

FIG. 12 is a block diagram of another communication method according to an embodiment of this application;
1201: A first apparatus determines first information.

Optionally, the first information may include information about a count value of at least one data.

For example, the at least one data includes/is discarded data, or data discarded by a second apparatus.

For example, the at least one data includes one or more data.

In an example, the at least one data may be discarded by the second apparatus due to network congestion, or is discarded by the second apparatus due to timeout of the at least one data/meeting a delay requirement of the at least one data, or is discarded by the second apparatus due to another reason. This is not specifically limited in this application.

It should be understood that, for related content of step 1201, refer to related content of FIG. 11 (for example, step 1101). Details are not described herein again.

Optionally, before step 1201, this application further includes 1200: The first apparatus obtains second information.

Optionally, the second information may include one or more of the following information of the at least one data: a start SN, an end SN, the start count value, the end count value, a first quantity, an SN or SNs of one or more included data, and a count value or count values of one or more included data.

Optionally, count values of all the data in the at least one data may be consecutive.

It should be understood that, for related content of step 1200, refer to related content of FIG. 11 (for example, step 1101 and/or step 1100). Details are not described herein again.

Optionally, that the first apparatus determines the first information may include: The first apparatus may determine the start count value of the at least one data based on any one or more of the start SN of the at least one data, a first state variable (or an SN of the first state variable), and a first parameter.

Optionally, that the first apparatus determines the first information may include: The first apparatus may determine the end count value of the at least one data based on any one or more of the end SN of the at least one data, the first state variable (or the SN of the first state variable), and the first parameter.

Optionally, that the first apparatus determines the first information may include: The first apparatus may determine, based on any one or more of the SN or SNs of the one or more data included in the at least one data, the first state variable (or the SN of the first state variable), and the first parameter, the count value or count values of the one or more data included in the at least one data.

Optionally, in step 1202, the first apparatus updates a state variable based on a count value of the at least one data or a count value or count values of the one or more data in the at least one data.

For example, after determining the first information, the first apparatus updates the state variable based on the count value of the at least one data or the count value or count values of the one or more data in the at least one data that are included in the first information.

Optionally, if a second condition is met, the first apparatus performs step 1202.

For example, the second condition may include: The first state variable is equal to (or greater than or equal to) a first count value (or the start count value of the at least one data, or the end count value of the at least one data, or any count value of the at least one data).

For example, "if the second condition is met" may be met/replaced with "when the first state variable is equal to (or greater than or equal to) the first count value (or the start count value of the at least one data, or the end count value of the at least one data, or any count value of the at least one data)", or "until the first state variable is equal to (or greater than or equal to) the first count value (or the start count value of the at least one data, or the end count value of the at least one data, or any count value of the at least one data)".

Optionally, the first count value is the count value of the first data. For example, the first data is data with a smallest count value in the at least one data. For example, the first count value is the start count value of the at least one data.

In an example, it is assumed that the first state variable is 3, the at least one data includes data #1 and data #2, a count value of the data #1 is 3, and a count value of the data #2 is 4. The first apparatus determines that the first information includes the count values of the data #1 and the data #2, and the data #1 and the data #2 are discarded data. The first state variable is equal to the count value of the data #1, that is, 3=3. The first apparatus updates the state variable based on the count value of the data #1 and/or the count value of the data #2.

Optionally, that second data the first apparatus update the state variable based on the count value of the at least one data or the count value or count values of the one or more data in the at least one data may include/be replaced with any one or more of an operation A', an operation B', an operation C', and an operation D'.

Operation A': The first apparatus delivers at least one received data whose count value is greater than or equal to a second count value plus 1.

Optionally, the second count value is a count value of second data. For example, the second data is data with a largest count value in the at least one data. For example, the second count value is the end count value of the at least one data.

For example, that the first apparatus delivers the at least one received data whose count value is greater than or equal to the second count value plus 1 may include any one or more of the following: data received by the first apparatus or a PDCP layer of the first apparatus, data that is not delivered by the first apparatus or the PDCP layer of the first apparatus, and data that exists/is stored in a receiving buffer of the first apparatus or the PDCP layer of the first apparatus.

For example, count values of the at least one received data whose count values are greater than or equal to the second count value plus 1 may be consecutive.

For example, that the first apparatus delivers the at least one received data whose count value is greater than or equal to the second count value plus 1 may include/be replaced: The first apparatus delivers at least one received fourth data whose count value is greater than or equal to the second count value plus 1.

For example, the fourth data may include any one or more of the following: data received by the first apparatus or the PDCP layer of the first apparatus, data that is not delivered by the first apparatus or the PDCP layer of the first apparatus, and data that exists/is stored in the receiving buffer of the first apparatus or the PDCP layer of the first apparatus.

For example, the count value corresponding to the fourth data is greater than or equal to the second count value plus 1.

For example, count values of the at least one fourth data may be consecutive.

For example, the at least one fourth data may include any one or more of the following: data that has been received, that is not delivered, and whose count value is greater than or equal to the second count value plus 1; data that exists/is stored in the receiving buffer of the first apparatus or the PDCP layer of the first apparatus and whose count value is greater than or equal to the second count value plus 1; data whose count value is greater than or equal the second count value plus 1 and that is received consecutively/stored consecutively; data that is received consecutively/stored in order and whose count value is greater than or equal to the second count value plus 1; and data that is received consecutively/stored consecutively starting from the second count value plus 1.

It should be noted that, the "data received consecutively" is not limited to a case in which the first apparatus consecutively receives the data in sequence, but is merely intended to indicate that COUNT values of the received data are consecutive. Optionally, the data received consecutively is data with consecutive count values. This does not mean that the data is consecutively received by the first apparatus or at the PDCP layer of the first apparatus.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. If the first count value is equal to the first state variable, the first apparatus may deliver the data #5 and the data #6 to an upper layer.

It should be understood that the operation A' is similar to the operation B in step 1102 in FIG. 11. For details, refer to the descriptions in FIG. 11. To avoid redundancy, details are not described herein again by using an example.

In a possible implementation, after the first apparatus delivers the at least one received data whose count value is greater than or equal to the second count value plus 1, the first apparatus may further update the first state variable to a third count value.

Operation B': The first apparatus updates the first state variable to the third count value.

Optionally, the third count value is greater than the first state variable.

Optionally, the third count value is greater than the second count value.

Optionally, data corresponding to the third count value is not received by the first apparatus.

Optionally, the data corresponding to the third count value does not include/is not discarded data.

For example, that the data corresponding to the third count value is not received by the first apparatus may include/be replaced with either or both of the following: The data corresponding to the third count value has not been delivered to the upper layer, and the data corresponding to the third count value does not exist/is not stored in the receiving buffer of the first apparatus or the PDCP layer of the first apparatus.

For example, the data corresponding to the third count value may include/be replaced with a PDCP SDU or a PDCP PDU corresponding to the third count value.

Optionally, the data corresponding to the third count value is a 1^{st} data that is not received and whose count value is greater than the first state variable (or the second count value). Optionally, excluding the discarded data, the data corresponding to the third count value is a 1^{st} data that is not received and whose count value is greater than the first state variable (or the second count value).

For example, the 1^{st} data that is not received and whose count value is greater than the first state variable (or the second count value) may include/be replaced with either or both of the following: a 1^{st} data that has not been delivered to the upper layer and whose count value is greater than the first state variable (or the second count value), and a 1^{st} data that does not exist/is not stored in the receiving buffer of the first apparatus or the PDCP layer of the first apparatus and whose count value is greater than the first state variable (or the second count value).

For example, excluding the discarded data, the 1^{st} data that is not received and whose count value is greater than the first state variable (or the second count value) may include/be replaced with either or both of the following: excluding the discarded data, a 1^{st} data that has not been delivered to the upper layer and whose count value is greater than the first state variable (or the second count value), and excluding the discarded data, a 1^{st} data that does not exist/is not stored in the receiving buffer of the first apparatus or the PDCP layer of the first apparatus and whose count value is greater than the first state variable (or the second count value).

For example, the first apparatus updates the first state variable to a COUNT of the 1^{st} data (for example, a PDCP SDU) that has not been delivered to the upper layer, and the COUNT of the 1^{st} data is greater than the first state variable (or the second count value). For example, the first apparatus updates the first state variable to a 1^{st} empty after the first state variable (or the second count value). For example, the first apparatus updates the first state variable to a 1^{st} empty after the first state variable (or the second count value), excluding the discarded data.

In an example, it is assumed that the first state variable is 4, and the data received and stored by the first apparatus includes data #5, data #6, and data #7. A COUNT of the data #5 is 5, a COUNT of the data #6 is 6, and a COUNT of the data #7 is 8. If the first count value is equal to the first state variable, the first apparatus delivers the data #5 and the data #6 to an upper layer. The first apparatus determines that a COUNT of a 1^{st} PDCP SDU that is not delivered to the upper layer is 7, and the first apparatus updates the first state variable RX_DELIV from 4 to 7.

It should be understood that the operation B' is similar to the operation E in step 1102 in FIG. 11. For details, refer to the descriptions in FIG. 11. To avoid redundancy, details are not described herein again by using an example.

Operation C': When a reordering timer is running, and the first state variable is greater than or equal to a third state variable, the first apparatus stops the reordering timer.

Operation D': When the reordering timer is not running, and the first state variable is less than the second state variable, the first apparatus starts the reordering timer, and/or the first apparatus updates the third state variable to the second state variable.

It should be understood that the operation C' and the operation D' are similar to the operation C and the operation D in step 1102 shown in FIG. 11. For details, refer to the example in FIG. 11. To avoid redundancy, details are not described herein again.

It should be understood that the above lists a specific example in which the first apparatus may update the state variable when the second condition is met. A sequence relationship between the foregoing operations A', B', C', and D' is not limited. The first apparatus may perform one or more of the operations A', B', C', and D'. This is not specifically limited in this application. For example, the operation A' is performed before the operation B'. For example, the operation B' is performed before the operation C'. For example, the operation C' is performed before the operation D'.

It should be understood that, after step 1201, the method may further include the following step.

Optionally, this application may further include 1203: The first apparatus updates the second state variable to the second count value plus 1.

For example, if the second count value (or the start count value of the at least one data, or the end count value of the at least one data, or any count value of the at least one data) is greater than or equal to the second state variable, the first apparatus performs step 1203.

In an example, it is assumed that the second state variable is RX_NEXT, and RX_NEXT is 3. The first information determined by the first apparatus includes the count value of the at least one data. The at least one data includes data #1, data #2, and data #3. A COUNT of the data #1 is 3, a COUNT of the data #2 is 4, and a COUNT of the data #3 is 5. The second count value of the at least one data is 5, where 5>3. The first apparatus updates RX_NXET to the COUNT of the data #3+1, that is, updates RX_NEXT to 6.

It should be understood that step 1203 and step 1202 shown in FIG. 12 are not logically distinguished. In other words, a sequence of step 1203 and step 1202 is not limited in this application.

For example, step 1203 may be performed before step 1202, or step 1203 may be performed after step 1202, or step 1203 may be performed simultaneously with step 1202 to update the state variable.

It should be further understood that step 1203 may not be limited to a case in which the first apparatus may perform step 1203 when the second condition is met. This is not specifically limited in this application.

Optionally, only one of step 1202 and step 1203 may be performed, or both step 1202 and step 1203 may be performed. This is not limited in this application. For example, the first apparatus may perform only step 1202, or may perform only step 1203, or may perform both step 1202 and step 1203.

Optionally, after the first apparatus determines the first information, if a third condition is met, the first apparatus may ignore the first information.

For example, the third condition may include: The first state variable is greater than the second count value (or the start count value of the at least one data, or the end count value of the at least one data, or any count value of the at least one data).

For example, that the first apparatus may ignore the first information may include/be replaced the following: The first apparatus may ignore the second information, and the first apparatus does not perform step 1202 and/or step 1203.

For example, when the first apparatus determines the first information, the first information includes the count value of the at least one data. The first apparatus determines that the second count value is less than the first state variable, and the first apparatus ignores the first information.

In a possible implementation, after the first apparatus determines the first information, if it is determined that the third condition is not met, the first apparatus does not need to perform (or does not perform) the foregoing step 1202 or step 1203, and the first apparatus directly ignores the first information.

In a possible implementation, after the first apparatus determines the first information, if it is determined that the third condition is met, the first apparatus may perform step 1202 and/or step 1203.

According to the method shown in FIG. 12, when the second condition is met, the first apparatus updates the state variable. A state update method is provided, to effectively avoid a problem that a PDCP window (or RX_DELIV) of a receive end may be stuck due to the discarded data, reduce a delay in delivering data by the PDCP layer to the upper layer, effectively avoid a problem of a data packet loss, and improve transmission reliability.

The following describes the technical solutions in embodiments of this application with reference to the accompanying drawings in embodiments of this application.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In addition, in embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be understood that in this application, "at least one (item)" means one or more. "A plurality of" refers to two or more than two. "At least two (items) "means two, three, or more than three. "And/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between the associated objects. "At least one of the following (items)" or a similar expression thereof means any combination of these items, including any combination of singular (items) or plural (items). For example, at least one of a, b, and (or) c may indicate a, b, c , "a and b" , "a and c", "b and c", or "a, b, and c", where a, b, and c may be singular or plural. Both "when ..." and "if" mean that corresponding processing is performed in an objective case, are not intended to limit time, do not require a determining action during implementation, and do not mean that there is another limitation.

It should be understood that, the conventional technologies may change with evolution of the technical solutions, and the technical solutions provided in this application are not limited to the provided conventional technologies.

It should be noted that different embodiments of this application or some steps (for example, any one or more steps) in different embodiments may be combined with each other to form a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified or a logical conflict occurs, terms and/or descriptions in different embodiments are consistent and may be mutually referenced.

It should be noted that a sequence of the steps in embodiments of this application is not limited in this application.

It should be noted that a determining sequence of different conditions in embodiments of this application is not limited in this application.

It should be noted that "after" and "when" in this application do not strictly limit a time point.

It should be noted that nouns, terms, and the like in this application are merely examples, and other names may be used. This is not limited in this application.

The above describes in detail embodiments on a communication method side of this application with reference to FIG. 9 to FIG. 12. The following describes in detail embodiments on a communication apparatus side of this application with reference to FIG. 13 and FIG. 15. It should be understood that descriptions of the apparatus embodiments correspond to the descriptions of the method embodiments, and therefore for a part that is not described in detail, refer to the foregoing method embodiments.

FIG. 13 is a block diagram of a communication apparatus 1300 according to an embodiment of this application. As shown in FIG. 13, the apparatus 1300 may include a transceiver unit 1310 and a processing unit 1320. The transceiver unit 1310 may communicate with the outside, and the processing unit 1320 is configured to process data. The transceiver unit 1310 may also be referred to as a communication interface or a sending/receiving unit.

In a possible design, the apparatus 1300 may implement steps or procedures performed by the first apparatus in the foregoing method embodiments. The processing unit 1320 is configured to perform processing-related operations of the first apparatus in the foregoing method embodiments, and the transceiver unit 1310 is configured to perform sending and receiving-related operations of the first apparatus in the foregoing method embodiments.

It should be understood that the device 1300 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1300 may be specifically a transmit end in the foregoing embodiments, and may be configured to perform procedures and/or steps corresponding to the transmit end in the foregoing method embodiments; or the device 1300 may be specifically a receive end in the foregoing embodiments, and may be configured to perform procedures and/or steps corresponding to the receive end in the foregoing method embodiments. To avoid repetition, details are not described herein again.

The device 1300 in the foregoing solutions has a function of implementing corresponding steps performed by the transmit end in the foregoing methods. Alternatively, the device 1300 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 13 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 14 is a block diagram of a communication apparatus 2000 according to an embodiment of this application. As shown in FIG. 14, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement the procedures and steps corresponding to the first apparatus in the foregoing method embodiments.

It should be understood that the device 2000 may be specifically the transmit end or the receive end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods can be implemented by using a hardware integrated logic circuit in the processor, or by using instructions in a form of software. The steps in the method disclosed with reference to embodiments of this application may be directly performed and completed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof.

It may be understood that the memory in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM), and a direct rambus dynamic random access memory (direct rambus RAM, DR RAM). It should be noted that the memory in the systems and methods described in this specification includes but is not limited to memories of these and any other appropriate types.

FIG. 15 is a block diagram of a chip system 3000 according to an embodiment of this application. As shown in FIG. 15, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the first apparatus in the foregoing method embodiments.

For example, the logic circuit 3010 is configured to implement processing-related operations performed by the first apparatus in the foregoing method embodiments, for example, processing-related operations performed by the first apparatus in the embodiment shown in FIG. 11. The input/output interface 3020 is configured to implement sending and/or receiving-related operations performed by the first apparatus in the foregoing method embodiments, for example, sending and/or receiving-related operations performed by the first apparatus in the embodiment shown in FIG. 11.

An embodiment of this application further provides a computer-readable storage medium, where the computer-readable storage medium stores computer instructions used to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effect of related content of any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation exceeds the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, or an apparatus) to perform all or some of the steps of the methods described in embodiments of this application. The foregoing storage medium includes: any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining first information, wherein the first information comprises information about a count value of first data, and the first data is discarded data; and
updating a state variable based on a first count value, wherein the first count value is the count value of the first data.

2. The method according to claim 1, wherein the first data is considered as having been received.

3. The method according to claim 2, wherein if a first condition is met, the first data is considered as having been received, wherein
the first condition comprises: a first state variable is less than or equal to the first count value, and the first state variable indicates a count value of a 1^{st} data that waits to be delivered.

4. The method according to any one of claims 1 to 3, wherein the first information comprises a count value of at least one data, the at least one data comprises the first data, and each of the at least one data is discarded data.

5. The method according to any one of claims 2 to 4, wherein
the first data is considered as having been received and stored in a buffer.

6. The method according to any one of claims 1 to 5, wherein the first information further comprises information about a first quantity, and the first quantity indicates a quantity of the discarded data.

7. The method according to any one of claims 1 to 6, wherein updating the state variable based on the first count value comprises:
if the first count value is greater than or equal to a second state variable, updating the second state variable to a sum of the first count value and the first quantity, or updating the second state variable to a sum of the first count value and 1; and/or
if the first count value is equal to the first state variable, delivering at least one third data, wherein the third data comprises data received and stored in a buffer, and a count value corresponding to the third data is greater than or equal to the first state variable; and/or
if the first count value is equal to the first state variable, updating the first state variable to a fourth count value, wherein the fourth count value is greater than the first state variable; wherein
the first state variable indicates a count value of a 1^{st} data that waits to be delivered, the second state variable indicates a count value of a next data that is expected to be received, and the first quantity indicates the quantity of the discarded data.

8. The method according to any one of claims 1 to 7, wherein updating the state variable based on the first count value further comprises:
if a reordering timer is running, and the first state variable is greater than or equal to a third state variable, stopping the reordering timer; and/or
if the reordering timer is not running, and the first state variable is less than the second state variable, starting the reordering timer, wherein
the first state variable indicates a count value of a 1^{st} data that waits to be delivered, the second state variable indicates a count value of a next data that is expected to be received, and the third state variable indicates a sum of a count value of data that triggers the reordering timer and 1.

9. The method according to any one of claims 1 to 8, wherein the method further comprises:
obtaining a sequence number SN of the first data or the first count value.

10. The method according to claim 9, wherein when the sequence number SN of the first data is obtained, the method further comprises:
determining the first count value based on the sequence number SN of the first data and the first state variable, wherein the first state variable indicates a count value of a 1^{st} data that waits to be delivered.

11. The method according to any one of claims 4 to 10, wherein when the first information comprises the count value of the at least one data, the method further comprises:
obtaining any one or more of the following information of the at least one data:
a start sequence number SN, an end sequence number SN, a start count value, an end count value, and the first quantity, wherein
the first quantity is a quantity of the discarded data in the at least one data.

12. The method according to claim 11, wherein the method further comprises:
determining the start count value of the at least one data based on the start sequence number SN and the first state variable; and/or
determining a count value of at least one of the at least one data based on the start count value of the at least one data and the first quantity, wherein
the first state variable indicates a count value of a 1^{st} data that waits to be delivered.

13. A communication method, comprising:
determining first information, wherein the first information comprises a count value of at least one data, and each of the at least one data is discarded data; and
if a second condition is met, performing any one or more of the following:
delivering at least one received data whose count value is greater than or equal to a second count value plus 1;
updating a first state variable to a third count value, wherein the third count value is greater than the second count value; and
if a reordering timer is running, and the first state variable is greater than or equal to a third state variable, stopping the reordering timer; or
if the reordering timer is not running, and the first state variable is less than a second state variable, starting the reordering timer, wherein
the second condition is: the first state variable is equal to a first count value, the first count value is a count value of first data, the first data is data with a smallest count value in the at least one data, the second count value is a count value of second data, the second data is data with a largest count value in the at least one data, the first state variable indicates a count value of a 1^{st} data that waits to be delivered, the second state variable indicates a count value of a next data that is expected to be received, and the third state variable indicates a sum of a count value of data that triggers the reordering timer and 1.

14. The method according to claim 13, wherein when the second state variable is less than the second count value, the method further comprises:
updating the second state variable to the second count value plus 1.

15. The method according to claim 13 or 14, wherein after determining the first information, the method further comprises:
if a third condition is met, ignoring the first information, wherein
the third condition comprises: the first state variable is greater than the second count value.

16. The method according to any one of claims 13 to 15, wherein the method further comprises:
obtaining any one or more of the following information of the at least one data:
a start sequence number SN, an end sequence number SN, a start count value, an end count value, and a first quantity, wherein
the first quantity is a quantity of the discarded data in the at least one data.

17. The method according to any one of claims 13 to 16, wherein when a sequence number SN of the first data is obtained, the method further comprises:
determining the first count value based on the sequence number SN of the first data and the first state variable, wherein the first state variable indicates a count value of a 1^{st} data that waits to be delivered.

18. The method according to claim 16 or 17, wherein the method further comprises:
determining the start count value of the at least one data based on the start sequence number SN and the first state variable; and/or
determining the end count value of the at least one data based on the end sequence number SN and the first state variable; and/or
determining the end count value of the at least one data based on the first count value and the first quantity, wherein
the first state variable indicates a count value of a 1^{st} data that waits to be delivered.

19. A communication apparatus, comprising a module or a unit configured to perform the method according to any one of claims 1 to 12, or a module or a unit configured to perform the method according to any one of claims 13 to 18.

20. A communication apparatus, wherein the apparatus comprises a processor, and the processor is configured to enable the communication apparatus to perform the method according to any one of claims 1 to 12, or is configured to enable the communication apparatus to perform the method according to any one of claims 13 to 18.

21. A computer-readable storage medium, wherein the computer-readable storage medium comprises instructions, and when the instructions are run, the computer is enabled to perform the method according to any one of claims 1 to 12 is implemented, or the computer is enabled to perform the method according to any one of claims 13 to 18 is implemented.

22. A computer program product, wherein the computer program product comprises instructions, and when the instructions are run, the method according to any one of claims 1 to 12 is implemented, or the computer is enabled to perform the method according to any one of claims 13 to 18 is implemented.
